# EUROPÄISCHE PATENTSCHRIFT

(11) **EP 1 373 420 B1**
(45) Veröffentlichungstag und Bekanntmachung des Hinweises auf die Patenterteilung: **30.11.2005**
(21) Anmeldenummer: 02706754.5
(22) Anmeldetag: 02.03.2002
(51) Int. Cl.: C09D 175/16

(54) **BESCHICHTUNGSGEMISCH AUF WASSERBASIS, VERFAHREN ZUM AUFBRINGEN EINER KORROSIONSSCHUTZSCHICHT MIT DIESEM GEMISCH, DERART BESCHICHTETE UNTERLAGE UND DEREN VERWENDUNG**
WATER-BASED COATING MIXTURE, METHOD FOR APPLICATION OF CORROSION PROTECTION LAYER WITH SAID MIXTURE, SUBSTRATES COATED THUS AND USE THEREOF
MELANGE DE REVETEMENT A BASE D'EAU, PROCEDE D'APPLICATION D'UNE COUCHE ANTICORROSION RENFERMANT CE MELANGE, SUBSTRAT AINSI RECOUVERT ET SON UTILISATION

(30) Priorität: 05.03.2001 DE 10110450; 31.08.2001 DE 10142687
(43) Veröffentlichungstag der Anmeldung: 02.01.2004
(73) Patentinhaber: Gros, Georg, 77728 Oppenau (DE)
(72) Erfinder: Gros, Georg, 77728 Oppenau (DE)
(74) Vertreter: Uppena, Franz
(86) Internationale Anmeldenummer: PCT/EP2002/002261
(87) Internationale Veröffentlichungsnummer: WO 2002/070616

(56) Entgegenhaltungen:
- EP-A- 0 742 239
- WO-A-01/23453

## Beschreibung

Die Erfindung betrifft ein Gemisch zum Aufbringen eines polymeren Überzugs auf eine Unterlage, wobei das Gemisch Wasser und ggf. auch organisches Lösemittel enthält sowie mindestens eine radikalisch polymerisierbare Verbindung enthält. Die Erfindung betrifft insbesondere ein Gemisch zum Aufbringen einer UV-härtbaren, schweißbaren Korrosionsschutzschicht auf eine metallische Unterlage, ein Verfahren zum Aufbringen einer gleitfähigen Korrosionsschutzschicht sowie eine derartig beschichtete Unterlage, insbesondere ein Metallblech.

Schweißbare Schutzüberzüge der genannten Art auf Basis anorganischer Pigmentpartikel und organischer Polymere sind bekannt und zum Beispiel in DE-C 34 12 234 für elektrolytisch dünnverzinktes, verformbares, phosphatiertes und chromatiertes Stahlblech beschrieben. Der Korrosionsschutzprimer besteht aus einer Mischung von 70 bis 95 % Zink, Aluminium, Graphit oder/und Molybdänsulfid und Korrosionsschutzpigmenten sowie aus 5 bis 30 % eines organischen Bindemittels und ggf. Additiven, bezogen auf den Trockenfilm. Das organische Bindemittel ist auf Basis von Polyesterharz oder/und Epoxidharz.

EP-B 0 298 409 offenbart derartige Überzüge für Stahlblech, die eine Schicht aus pyrogener Kieselsäure und einer gehärteten organischen Matrix aufweisen, die durch thermische Vernetzung aus einem Epoxidharz und einem mehrwertigen Isocyanat erhalten worden ist. Dieser Überzug wird auf einen unlöslichen Chromatfilm aufgebracht, der wiederum dem mit einer Schicht auf Basis von Aluminium oder/und Zink überzogenen Stahl auflagert.

EP-B 0 344 129 lehrt ähnliche Überzüge mit einer Dicke von bis zu 2 µm, die durch Härten von Epoxidharzen mit einem Epoxyäquivalent zwischen 500 und 2000 mittels Aminen, Melaminen, Phenolharzen oder/und dergleichen erhalten werden.

In EP-A 0 761 320 werden beschichtete Stahlbleche aufgeführt, die eine organische Schutzschicht tragen, die durch elektrolytische Polymerisation von ionogenen polymerisierbaren organischen Verbindungen aus wässeriger Lösung erzeugt worden ist.

In EP-A 0 659 855 wird ein wässeriges Überzugsgemisch beschrieben, aus dem härtbare Rostschutzüberzüge abgeschieden werden können. Das Gemisch enthält mindestens ein wasserlösliches Alkydharz und wenigstens ein wasserlösliches Acrylharz, das jeweils einen Säurewert von 25 bis 100, einen Hydroxyl-Wert von 35 bis 200 und einen SP-Wert von 10 bis 11 aufweist, sowie einen Härter ausgewählt aus Oxazoline-Verbindungen und Melaminharzen und mindestens einen sauren Katalysator.

Alle diese bekannten Überzugsgemische werden thermisch gehärtet, wodurch eine dauerhafte Resistenz gegen Chemikalien und Witterungseinflüsse sowie ein ausreichender Rostschutz erzielt werden. Die thermische Härtung weist den Nachteil eines hohen Energieverbrauchs auf. Die Temperatur der Substrate (= Unterlagen) liegt zum Härten meist im Bereich von 140 bis 250 °C.

Aufgrund der hohen . Temperaturen beim Härten sind die auf diese Weise hergestellten Überzüge weniger elastisch als solche, die geringeren Temperaturen unterzogen worden sind. Daher sind die mit einem thermisch bei hoher Temperatur gehärteten organischen Überzug versehenen Substrate wie z.B. Stahlbleche nur in begrenztem Maße verformbar, was zum Beispiel durch Tiefziehen oder Abkanten erfolgt. Hierzu ist zumeist eine Behandlung mit Ziehöl erforderlich, die bei einer höheren Elastizität der Überzüge entfallen könnte. Die erforderlichen hohen Härtungstemperaturen können zudem zu Gefügeveränderungen in der Unterlage führen.

Die bekannten Beschichtungsgemische enthalten häufig Zinkpulver. Derartige Gemische neigen zu Korrosion, die zwischen der pigmentierten Schicht und der metallischen, gegebenenfalls verzinkten Unterlage einsetzt. Andererseits ist zur Erzielung einer schweißbaren Beschichtung für das elektrische Schweißen ein Gehalt an elektrisch leitfähigen Bestandteilen erforderlich, der die für das Schweißen erforderliche elektrische Mindestleitfähigkeit gewährleistet.

WO 00/75250 des Anmelders offenbart ein UV-härtbares Beschichtungsgemisch mit Korrosionsschutzeigenschaften. Das Gemisch eignet sich insbesondere zur Beschichtung von Stahlband oder -blech, das verzinkt und/oder chromatiert wurde. Solche Materialien werden generell in der Automobilindustrie eingesetzt. Das Beschichtungsgemisch enthält ein polymeres organisches Bindemittel, eine niedermolekulare, flüssige, radikalisch polymerisierbare Verbindung, eine bei Einwirkung von aktinischer Strahlung freie Radikale bildende Verbindung und als leitfähiges Pigment ein Oxid, Phosphat oder/und Phosphid von Eisen oder Aluminium oder Graphit-Glimmerpigmenten. Das Bindemittel ist ausgewählt aus der Gruppe bestehend aus Kondensationsharzen, Epoxyharzen, Poly(meth)acrylaten, Polyurethanen, Polyestern und Polyethem, vorzugsweise epoxydierten Novolaken, Bisphenol-Epichlorhydrin-Kondensationsprodukten und Veresterungsprodukten dieser Harze oder Polymeren mit (Meth)acrylsäure. Die radikalisch polymerisierbare Verbindung ist ein Gemisch von Verbindungen, von denen mindestens ein Teil mehr als eine polymerisierbare Gruppe im Molekül enthält, oder vollständig aus diesen besteht, vorzugsweise Estern einer α-, β-ungesättigten Carbonsäure, vorzugsweise Acryl- oder Methacrylsäure, mit einem zwei- oder mehrwertigen monomeren oder oligomeren Alkohol. Die Gemische sind vorzugsweise frei von organischen Lösungsmitteln und Wasser. Die erhaltenen organischen Überzüge sind nach der UV-Härtung gut verformbar, schweißbar und bieten einen hervorragenden Korrosionsschutz. Sie haben jedoch den Nachteil, daß die Härtung weitgehend oder sogar vollständig mit aktinischer Strahlung vorgenommen werden muß. Dies erfordert - insbesondere für Bandanlagen, die mit hoher Geschwindigkeit laufen - einen sehr hohen Aufwand an Anlagentechik und Energieeinsatz. Derzeit ist die Geschwindigkeit von Bandanlagen, bei denen die Härtung weitgehend oder vollständig durch UV-Bestrahlung vorgenommen werden soll, auf solche bis etwa 60 oder bis etwa 80 m/min begrenzt. Der Investitionsaufwand ist außerordentlich hoch.

WO 01/23453 A1 beschreibt mit UV-Strahlung und thermisch härtbare wässerige Polyurethandispersionen. EP 0 742 239 A1 lehrt Zweikomponenten-Beschichtungssysteme, die vernetzbare, OH⁻-Gruppen aufweisende Polymere auf Basis von Polyurethan und Acrylat sowie Polyisocyanat-Vernetzer enthalten.

Während die Stahlbleche, für deren Beschichtung die vorstehend beschriebenen Mischungen entwickelt wurden, bis jetzt generell zum Erzielen einer höheren Korrosionsbeständigkeit chromatiert wurden, rückt man davon aus Umweltgründen mehr und mehr ab. Es wird davon ausgegangen, daß zumindest in der Automobilindustrie in naher Zukunft praktisch ausschließlich Bleche eingesetzt werden, die chromatfrei vorbehandelt wurden.

Derartige nicht chromatierte metallische Unterlagen, also beispielsweise Stahlbänder oder Stahlbleche, erfordern, wie sich nun gezeigt hat, in einigen Fällen eine höhere Dicke der auf ihnen aufgebrachten Schicht, um die gleiche Korrosionsbeständigkeit wie bei chromatierten Blechen zu gewährleisten: Die Trockenfilmschichtdicke der polymeren Beschichtung, die auf die Vorbehandlungsbeschichtung aufgebracht wird, muß dann nach dem Stand der Technik eine Dicke im Bereich von 4 bis 10 µm betragen, während sie bei chromatierten Unterlagen nach dem Stand der Technik nur eine Dicke im Bereich von 2 bis 4 µm benötigen.

Die bis jetzt zur Verfügung stehenden Beschichtungsgemische sind häufig jedoch für die bei chromatierten metallischen Unterlagen notwendigen Schichtdicken ausgefegt. Dabei ist im Hinblick auf die Schweißbarkeit generell auch die Menge des vorhandenen leitfähigen Pigments entsprechend den bei chromatiertem Stahl notwendigen Schichtdicken bemessen. Die Leitfähigkeit läßt sich zwar prinzipiell einfach durch Zugabe einer größeren Menge an Pigment den bei hoher Schichtdicke anfallenden Anforderungen anpassen. Es treten jedoch Fälle auf, insbesondere bei hinsichtlich ihrer Zusammensetzung und Eigenschaften fein abgestimmten Beschichtungsgemischen, in denen die zum Erreichen der gewünschten Schweißbarkeit notwendige Menge an Pigment nicht mehr zugefügt werden kann. Gründe dafür können eine auf zu hohe Werte ansteigende Viskosität, die Verminderung der Reaktivität oder das Auftreten von Inhomogenitäten bis hin zur Klumpenbildung sein. In solchen Fällen ist ein Verändern der Zusammensetzung der Mischungen oft unvermeidlich.

Es besteht somit ein Bedarf an Beschichtungsgemischen, die neben den oben dargelegten erwünschten Eigenschaften UV-härtbarer Beschichtungsgemische das Erreichen hoher Schichtdicken mit guter Schweißbarkeit ermöglichen, ohne daß dabei gegebenenfalls die Zusammensetzung geändert werden muß.

Weiterhin werden von den Stahlherstellern insbesondere Beschichtungsgemische gewünscht, die ein vollständiges Behandeln und Beschichten des anschließend an die Weiterverarbeiter gelieferten Stahls oder Stahlblechs ohne Unterbrechnung in einer Produktionseinheit ermöglicht. Bis jetzt werden die Stahlbänder und -bleche beim Hersteller nach Beendigung des Walzprozesses generell verzinkt bzw., falls erwünscht, chromatiert und anschließend auf Rollen aufgewickelt. Die so erhaltenen Rollen des metallischen Bandes (Coils) Werden dann zur Beschichtungseinheit transportiert, in der die Polymer-haltige Beschichtung aufgebracht wird. Das Transportieren zur Beschichtungseinheit sowie das Ab- und Aufwickeln der Rolle stellen unerwünschte, zu vermeidende Kostenfaktoren dar.

Erwünscht ist ein UV-härtbares Beschichtungsgemisch, das es ermöglicht, die Vorbehandlung und das Beschichten mit einem Polymere enthaltenden Überzug in einer einzigen Produktionseinheit durchzuführen (sogenanntes Inline-Verfahren). Dazu werden besondere Anforderungen an die Härtbarkeit des Beschichtungsgemischs gestellt. Die Verzinkung eines Stahllilechs wird generell bei Geschwindigkeiten ab ca. 120 m/min durchgeführt. Um einen problemlosen Ablauf ohne Zwischenlagerung zu gewährleisten, muß die Beschichtung einschließlich der Härtung ebenfalls bei derartigen Geschwindigkeiten durchgeführt werden. Daher werden Beschichtungsgemische gefordert, die eine Beschichtung bei diesen hohen Geschwindigkeiten erlauben und bei denen die erhaltene Schicht eine ausreichende Härte aufweist.

Die Aufgabe der vorliegenden Erfindung besteht darin, Beschichtungsgemische mit den oben erwähnten Eigenschaften bezüglich Schweißbarkeit und Härtbarkeit zur Verfügung zu stellen. Ferner sollen diese Beschichtungsgemische auch für die Applikation auf schnellen Bandanlagen geeignet sein. Die Beschichtungsgemische sollen ferner möglichst frei von Schwermetallen sein und auf Vorbehandlungsbeschichtungen aufgebracht werden können, die möglichst chromfrei sind. Schließlich besteht die Aufgabe, ein geeignetes Verfahren zur Applikation derartiger Beschichtungsgemische vorzuschlagen, das die hervorragenden Eigenschaften sicher und reproduzierbar zu erzielen ermöglicht.

Die Aufgabe , wird gelöst durch ein Gemisch zum Aufbringen eines polymeren Überzugs auf eine Unterlage, wobei das Gemisch Wasser und ggf. auch organisches Lösemittel enthält sowie mindestens eine wasserdispergierbare radikalisch polymerisierbare Verbindung, mindestens eine wasserdispergierbare polymerisierbare nachvernetzende Verbindung, mindestens eine bei Einwirkung von aktinischer Strahlung freie Radikale bildende wasserdispergierbare Verbindung, mindestens ein Korrosionsschutzpigment sowie mindestens eine Substanz ausgewählt aus elektrisch leitfähigen Substanzen, Wachs und wachsartigen Substanzen, wobei die radikalisch polymerisierbare Verbindung bei der aktinischen Bestrahlung mit den gebildeten freien Radikalen bei Raumtemperatur nicht vollständig aushärten kann, sondern weiterhin reaktive Bindungen aufweist, die im Kontakt mit der nachvemetzenden Verbindung zu einer weitgehenden oder vollständigen Aushärtung führen.

Vorzugsweise enthält das Gemisch Wasser und ggf. auch organisches Lösemittel sowie mindestens ein radikalisch polymerisierbares Bindemittel, mindestens eine bei Einwirkung von aktinischer Strahlung freie Radikale bildende Verbindung, mindestens eine elektrisch leitfähige Substanz wie z.B. ein Pigment und mindestens eine nachvemetzende Verbindung.

Bei Einwirkung von aktinischer Strahlung bildet der mindestens eine Photoinitiator freie Radikale aus, die mit dem radikalisch polymerisierbaren Bindemittel reagieren und dieses bei der und ggf. kurz nach der sogenannten UV-Härtung unvollständig vernetzen. Nach dieser chemischen Reaktion kann dieses Bindemittel noch reaktive Gruppen wie OH- und Polyol-Gruppen aufweisen, die die chemische Beständigkeit und die Korrosionsbeständigkeit der hieraus gebildeten Beschichtung begrenzen können.

Es wurde nun gefunden, daß es sehr vorteilhaft ist, wenn dem Bindemittelgemisch eine nachvemetzende Verbindung zugesetzt wird, die nach einer UV-Härtung, die nicht alle freien Bindungsarme absättigt, eine nachträgliche chemische Aushärtung zu einer weitgehenden oder vollständigen Vernetzung ermöglicht. Dies erfolgt häufig durch Polyaddition. Die nachvemetzende Verbindung kann das radikalisch polymerisierbare Bindemittel, das nur teilweise ausgehärtet ist, chemisch weitgehend oder gänzlich aushärten, indem sie die reaktiven Gruppen des UV-gehärteten Bindemittels bindet und somit die Korrosionsbeständigkeit des ausgehärteten Polymers deutlich erhöht.

Die Aufgabe wird außerdem gelöst durch ein Verfahren zum Aufbringen einer gleitfähigen Korrosionsschutzschicht auf eine Unterlage, bei dem man das erfindungsgemäße Gemisch auf die Oberfläche einer metallischen oder polymeren Unterlage, vorzugsweise auf ein unbeschichtetes oder beschichtetes Stahlband bzw. Stahlblech oder auf ein Kunststoffteil, aufbringt, wobei man das Gemisch trocknet und die aufgebrächte Beschichtung solange mit aktinischer Strahlung einer solchen Intensität bestrahlt, daß eine feste, harte, zähelastische Schicht gebildet wird, die eine Schichtdicke im Bereich von 0,5 bis 15 µm aufweist.

Diese feste, harte, zähelastische Schicht wird bei der Nachvernetzung üblicherweise noch ein wenig fester und noch ein wenig zähelastischer. Diese Beschichtung kann aber auch noch oft umgeformt, wenn auch teilweise mit einer geringeren Umformintensität. Durch die Nachvemetzung bekommt diese Beschichtung jedoch vor allem eine stärkere Beständigkeit gegen organische Lösemittel, gegen gelöste Alkalien und andere aggressive chemische Stoffe sowie eine deutlich erhöhte Korrosionsbeständigkeit.

Unter dem Begriff "wasserdispergierbar" im Sinne dieser Erfindung wird überall in diesem Text der Oberbegriff von "wasserdispergierbar", "wasserlöslich", "wassermischbar" und "wasserverdünnbar" verstanden. Vorzugsweise sind im wesentlichen alle oder sämtliche organischen Verbindungen, die dem Gemisch zugegeben werden oder in diesem Gemisch vor der Vernetzung enthalten sind, wasserdispergierbar. Vorzugsweise sind nur oder nahezu nur die elektrisch leitfähigen Verbindungen und ggf. Korrosionsschutzpigmente sowie ggf. einzelne weitere Additive nicht in Wasser dispergierbar, entsprechend dem oben definierten Oberbegriff.

Mit dem erfindungsgemäßen, Wasser und ggf. organische(s) Lösemittel enthaltenden Überzugsgemisch bzw. mit dem erfindungsgemäßen Verfahren können die verschiedensten metallischen bzw. polymeren Unterlagen beschichtet werden: Bleche, Platten, Bänder, Profile, Abschnitte, Drähte, Formkörper, jeweils im ungeschnittenen bzw. geschnittenen/gestanzten, im ungeformten bzw. verformten/umgeformten Zustand, vor oder/und nach einem Fügen wie z.B. durch Clinchen, Kleben, Schweißen usw.. Besonders bevorzugt sind dieses Überzugsgemisch bzw. dieses Verfahren für Bänder und Drähte, die mit hoher Geschwindigkeit beschichtet werden sollen, weil hiermit sehr schnell eine Teilvemetzung erzielt werden kann.

Als metallische Unterlagen eignen sich grundsätzlich alle Arten von metallischen Materialien, insbesondere Stähle, Edelstähle, mit Zink- oder/und Aluminium haltigen Beschichtungen versehene metallische Werkstoffe, Aluminium und Aluminiumlegierungen, Magnesiumlegierungen, Kupfer und Kupferlegierungen, Messing, Bronze, Nickel-, Titan-, Zink- bzw. Zinnlegierungen.

Als polymere Unterlagen eignen sich grundsätzlich alle Kunststoffoberflächen, Folienoberflächen und Lackoberflächen. Hierzu gehören beispielsweise Kunststoffplatten, Kunststoff-Formteile, Platten und Formteile insbesondere für Möbel, im Bauwesen, im Apparatebau, im Fahrzeugbau und in der Luftfahrtindustrie. Die elektrische leitfähige, erfindungsgemäße Beschichtung kann hierbei, insbesondere nach Erdung dieser Beschichtung, zur Vermeidung der elektrostatischen Aufladung der polymeren Komponenten bzw. Oberflächen eingesetzt werden.

Die Beschichtung mit dem erfindungsgemäßen Polymer-haltigen Überzugsgemisch erfolgt vorzugsweise nach einer Vorbehandlung mit einer weitgehend oder gänzlich von Chrom(VI)-Verbindungen freien wässerigen Zusammensetzung, besonders bevorzugt auch weitgehend oder gänzlich frei von Schwermetall-haltigen Zusätzen wie z.B. auf Basis Cadmium, Kobalt, Kupfer oder/und Nickel.

Die erfindungsgemäße polymer-haltige Beschichtung ist ebenfalls vorzugsweise weitgehend oder gänzlich frei von Chrom(VI)-Verbindungen, besonders bevorzugt auch weitgehend oder gänzlich frei von Schwermetall-haltigen Zusätzen wie z.B. solchen auf Basis Cadmium, Kobalt, Kupfer oder/und Nickel.

Das erfindungsgemäße Beschichtungsgemisch enthält Wasser. Es wird dem Gemisch vorzugsweise in Form von wässeriger Bindemittel-Dispersion oder/und in Form von voll entsalztem Wasser zugegeben. In diesem ist das radikalisch polymerisierbare Bindemittel gelöst, verdünnt oder/und dispergiert enthalten. Es kann auch mindestens ein organisches Lösemittel, vorzugsweise in Gehalten von nicht mehr als 30 Gew.%, besonders bevorzugt von nicht mehr als 15 Gew.-% - auf den Gehalt an Wasser gerechnet - enthalten. Das mindestens eine eingesetzte organische Lösemittel soll entweder vollständig in Wasser löslich, wassermischbar bzw. wasserverdünnbar sein. Bevorzugte organische Lösemittel sind ein- bzw. mehrwertige Alkohole, Ester, Glykolether und Ketone.

Die erfindungsgemäße Zusammensetzung enthält mindestens ein organisches Bindemittel, wobei jedoch wenigstens eines der Bindemittel radikalisch polymerisierbar sein muß. Wenn nur ein organisches Bindemittel enthalten ist, ist die nachvemetzende Verbindung in verkappter Form daneben enthalten. Wenn die nachvemetzende Verbindung nicht verkappt vorliegt, wird sie als organisches Bindemittel angesehen. Der Gehalt der organischen Bindemittel - berechnet als Trockensubstanz in der gesamten, Wasser enthaltenden Zusammensetzung - kann im Bereich von 8 bis 50 Gew.% liegen, vorzugsweise im Bereich von 15 bis 35 Gew.-%. Der Anteil der radikalisch polymerisierbaren Bindemittel - ggf. als Teil der organischen Bindemittel und berechnet als Trockensubstanz in der gesamten, Wasser enthaltenden Zusammensetzung (Naßlack) - kann im Bereich von 8 bis 30 Gew.% liegen, vorzugsweise ein Mindestgehalt von 10 Gew.% bzw. ein Maximalgehalt von 25 Gew.%. Besonders bevorzugt ist ein Mindestgehalt von 12 Gew.-% bzw. ein Maximalgehalt von 22 Gew.-%.

Das Gewichtsverhältnis der radikalisch polymerisierbaren Bindemittel zu den nachvemetzenden Bindemitteln liegt bevorzugt im Bereich von 40 : 60 bis 95 : 5, besonders bevorzugt im Bereich von 60 : 40 bis 85 : 15, bezogen auf die Trockengewichte. Proportional hierzu ergeben sich die Anteile an UV-Härtung zu chemischer Nachvemetzung.

Die radikalisch polymerisierbaren Verbindungen haben ungesättigte polymerisierbare Gruppen, die mit den strahlungsinitiiert aus den Photoinitiatoren entstehenden Gruppen reagieren und ein wasserunlösliches Netzwerk bilden können. Das so entstehende Netzwerk und seine Wasserunlöslichkeit ist auch - in gewissem Umfang - für die Korrosionsbeständigkeit, insbesondere gegen Wasser und gegen wässerige Salzlösungen, wichtig. Vorzugsweise ist das Bindemittel selbst mindestens ein Oligomer, Präoligomer, Polymer, Präpolymer, Copolymer bzw. Blockcopolymer. An diesem sind dann die erwähnten polymerisierbaren Gruppen vorhanden, die eine weitere Polymerisation mit den Gruppen der nachvemetzenden Verbindung ermöglichen. Der Begriff "Polymer" im Sinne dieser Erfindung umfaßt die oben genannten, für Bindemittel aufgeführten Strukturformen.

Das erfindungsgemäße Gemisch enthält mindestens eine radikalisch polymerisierbare Verbindung, die freie OH- oder/und Polyol-Gruppen aufweist. Geeignete radikalisch polymerisierbare Bindemittel sind in Wasser dispergierbare Acrylate, Methacrylate, Epoxyharze, Polyurethane und Polyester, vorzugsweise Epoxyacrylate, Urethanacrylate und acrylhaltige Polyester, insbesondere Epoxyacrylate, Urethanacrylate und acrylhaltige Polyester, die freie OH-Gruppen aufweisen.

Die in dem zugesetzten radikalisch polymerisierbaren Bindemittel vorhandenen polymerisierbaren Gruppen sind vorzugsweise ethylenisch ungesättigte, methylenisch ungesättigte oder/und propylenisch ungesättigte Gruppen. Um eine möglichst gute Vernetzung und damit Unlöslichkeit und Resistenz der Schicht gegenüber Lösemitteln, Chemikalien und Witterungseinflüssen zu erzielen, sollte wenigstens ein Teil des erfindungsgemäß verwendeten . Bindemittels zumindest zwei polymerisierbare Gruppen enthalten. Bevorzugte ethylenisch ungesättigte Gruppen sind von α-, β-ungesättigten Carbonsäuren abgeleitet. Diese Carbonsäure(n) kann/können beispielsweise als Ester an das Bindemittel gebunden sein. Bevorzugte α-, β-ungesättigte Carbonsäuren sind Acryl- und Methacrylsäure(n).

Derartige Oligomere bzw. Polymere sind dem Fachmann, insbesondere für die radikalisch polymerisierbaren Bindemittel und für die nachvemetzenden Verbindungen, grundsätzlich bekannt, ebenso wie dazu ähnliche oder davon abgeleitete Oligomere bzw. Polymere, die ebenfalls in dem erfindungsgemäßen Verfahren verwendet werden können. Bereits ohne Zusatz von Wasser oder/und organischem Lösemittel können die Oligomere in flüssiger Form vorliegen und neben dem Harz auch Weichmacher enthalten, während die Polymere oft als im wesentlichen reines, vielfach weiches Harz im festen Zustand vorliegen.

Die erfindungsgemäßen Beschichtungsgemische können einkomponentig sein, das heißt, nur ein Bindemittel enthalten, also in Form eines Gemischs aller notwendigen Bestandteile vorliegen, wenn die nachvemetzende Verbindung verkappt ist. Es ist bevorzugt, die erfindungsgemäßen Beschichtungsgemische zweikomporientig, das heißt mit zwei verschiedenen Bindemitteln, zur Verfügung zu stellen. Die erste Komponente (A) kann alle oder fast alle Bestandteile z.B. bis auf die nachvemetzende Verbindung enthalten (radikalisch polymerisierendes Bindemittel usw.); die zweite Komponente (B) kann dann die nachvemetzende Verbindung enthalten. Die Komponente B wird bevorzugt vor der Verarbeitung durch Rühren in die Komponente A eingebracht und innig mit dieser z.B. durch Rühren vermischt. Es können jedoch in ähnlicher Weise auch drei oder mehr Komponenten zusammengeführt werden.

Vorzugsweise wird das Beschichtungsgemisch so ausgewählt und das erfindungsgemäße Verfahren so eingestellt, daß durch die aktinische Strahlung die sog. UV-Härtung und ggf. auch gleichzeitig eine chemische Nachvemetzung ausgelöst wird. In dieser Anmeldung wird der Einfachheit halber die aktinische Strahlung mit UV-Strahlung und die daraus resultierende Vernetzung als UV-Härtung bezeichnet, weil das meistens der Hauptanteil der Strahlung ist. Während die UV-Härtung bei starker UV-Bestrahlung in 0,5 bis 100 sec, vorzugsweise in 0,8 bis 60 sec, insbesondere in 1 bis 5 sec, zu einer weitgehenden Vernetzung der UV-härtbaren Bestandteile führt, benötigt die ggf. gleichzeitig einsetzende chemische Vernetzung eine sehr viel längere Zeit, je nach Anteilen und Arten der vemetzbaren Verbindungen, Schichtdicken und angewandten Temperaturen meist Stunden oder bis zu ca. 10 Tagen, um eine weitgehende bis vollständige Vernetzung aller vemetzbaren Verbindungen zu erzielen. Die chemische Nachvemetzung kann durch Erwärmung beschleunigt bzw. verstärkt werden. Da beschichtete Stahlbänder oft im warmen Zustand von etwa 40 °C aufgewickelt werden, wird die Wärme im Coil noch längere Zeit gespeichert und kann zu einer verkürzten und zu einer vollständigeren Nachvemetzung führen. Die chemische Vernetzung, die ggf. durch erhöhte Temperatur beschleunigt bzw. verstärkt wird, wird in dieser Anmeldung als Nachvemetzung bezeichnet.

Wenn die nachvemetzende Verbindung in verkappter Form vorliegt, muß sie erst auf eine Temperatur oberhalb der Verkappungstemperatur, die vorwiegend im Bereich von 75 bis 150 °C liegt, erhitzt werden, um die verkappte Verbindung in eine reaktive Form zu bringen. Durch die Verkappung ist es möglich, einen auf Dauer nicht vernetzenden, lagerstabilen Lack zu bereiten, der ohne Verkappung innerhalb von wenigen Stunden bei Raumtemperatur bereits ausreagieren würde. Zum gewünschten Zeitpunkt kann die verkappte nachvemetzende Verbindung durch Erhitzen mindestens auf die Verkappungstemperatur aktiviert und die Nachvemetzung eingeleitet werden.

Die nachvemetzenden Bindemittel können solche auf der Basis von aliphatischem oder/und aromatischem Isocyanat, insbesondere Di- oder Polyisocyanat bzw. - cyanurat, wobei die Isocyanat- bzw. Isocyanurat-Endgruppen ggf. durch an sich bekannte Blockierungsmittel blockiert (= verkappt) sein können. Die Blockierungsmittel können je nach ihrer Art bei bestimmten Mindesttemperaturen etwa im Bereich von 75 °C bis 160 °C zur Aufspaltung gebracht werden, so daß die aufgespaltenen reaktiven Gruppen weiter reagieren können. Das kann der Zwischenlagerung von UV-gehärteten Unterlagen wie z.B. Coils vor der Weiterverarbeitung, vor der Weiterverarbeitung nach dem Umformen bzw. vor dem Überlackieren, Verkleben oder/und Verschweißen dienen.

Der Anteil der UV-Härtung an der gesamten Aushärtung/Vernetzung liegt vorzugsweise im Bereich von 90 bis 30 %, besonders bevorzugt im Bereich von 85 bis 35 %, ganz besonders bevorzugt im Bereich von 75 bis 45. Der restliche Anteil der Vernetzung ist chemischer Natur, auch wenn er thermisch verstärkt bzw. beschleunigt werden kann.

Wenn die nachvemetzende(n) Verbindung(en) alle verkappt vorliegen, kann die Nachvemetzung nicht durch die UV-Bestrahlung gestartet werden, weil dazu die Erwärmung nicht ausreicht, um die Verkappungstemperatur zu erreichen. Daher ist es möglich, in automatischen Fertigungsstraßen bzw. auf schnell laufenden Bändern erfindungsgemäße Beschichtungen aufzubringen, die zuerst durch UV-Strahlung ausgehärtet werden, aber dennoch unvollständig vernetzt vorliegen. In diesem Zustand können die beschichteten Unterlagen gelagert werden, oder es können weitere Prozeßschritte folgen wie z.B. ein Umformen, da die UV-gehärtete Beschichtung so flexibel sein kann, daß sie ohne Beschädigung des polymeren Überzugs verformt werden kann, auch auf einer metallischen Unterlage auflagemd. Die beschichteten Unterlagen können dann - beispielsweise nach der Lagerung bzw. Umformung - mindestens auf die Verkappungstemperatur erwärmf werden, so daß die nachvernetzenden Verbindungen reaktiv werden und die chemische Nachvernetzung eingeleitet wird.

Ein wichtige Komponente des erfindungsgemäßen Beschichtungsgemisches ist die mindestens eine nachvernetzende Verbindung. Sie dient dazu, eine weitgehende oder sogar vollständige Aushärtung des erfindungsgemäßen Gemischs nach der UV-Härtung zu erreichen. Aufgrund höherer Anteile dieser Nachvemetzung ist es möglich, die Bandgeschwindigkeit bei der UV-Härtung deutlich zu erhöhen, weil nur ein geringer Anteil aller vemetzbaren Verbindungen aushärten soll und weil der Anteil der vernetzbaren Verbindungen in der erfindungsgemäßen Überzugsschicht vergleichsweise gering ist. Im allgemeinen läßt sich die Bandgeschwindigkeit bei Umstellung von einer (nahezu) reinen UV-Aushärtung auf eine erfindungsgemäß gemischte Vernetzung um ca. 10 bis 70 %, bevorzugt um ca. 20 bis 50 %, insbesondere um ca. 30 bis 40 % bei gleichbleibender Lampenleistung erhöhen.

Daher ist es möglich, nur einen Teil der Vernetzung durch UV-Härtung zu bewirken und danach eine allmähliche, sich ggf. über etwa 12 Tage erstreckende Nachvemetzung zu bewirken. Die Nachvemetzung kann sich bei Raumtemperatur über einige Tage erstrecken und kann durch erhöhte Temperatur oder/und in Gegenwart eines Katalysators für die nachvemetzende Verbindung wie z.B. Dibutylzinnlaurat (DBTL) beschleunigt werden. Sie wird bei unverkappt vorliegenden nachvemetzenden Verbindungen eingeleitet durch den Wärmeeintrag bei der aktinischen Bestrahlung, da die polymere Schicht dabei auf Temperaturen im Bereich von 60 und 95 °C, insbesondere im Bereich von 70 bis 85 °C, erwärmt wird.

Die nachvemetzende Verbindung bewirkt eine Nachvemetzung des Beschichtungsgemischs durch eine thermisch ausgelöste Reaktion. Nach der Beschichtung der metallischen Unterlagen gefolgt von einer Wärmebehandlung zum Abdampfen des Wassers und der UV-Bestrahlung weist die metallische Unterlage meist eine Temperatur von bis zu 80 °C auf. Dabei tritt die Nachvemetzung ein.

Die mindestens eine nachvemetzende Verbindung wird im allgemeinen so ausgewählt, daß diese mit Verbindungen oder Funktionen reagieren können, die in dem erfindungsgemäß verwendeten Bindemittel auf Basis Polyol vorhanden sind und durch Isocyanat bzw. lsocyanurat aktiviert werden können. Als Polyole sind Verbindungen auf Basis von Acrylat, Methacrylat, Epoxid, Polyurethan und Polyester bevorzugt, insbesondere Epoxyacrylate, Urethanacrylate und acrylhaltige Polyester. Die Verbindungen oder Funktionen können auch solche sein, die in dem erfindungsgemäßen Bindemittelgemisch vorhanden sind, etwa um eine erwünschte Löslichkeit oder Viskosität einzustellen. Die Verbindungen oder Funktionen können auch zusätzlich dem Beschichtungsgemisch zugegeben werden, um die Nachvemetzung zu ermöglichen.

Ein wichtiges Merkmal der nachvemetzenden Verbindung ist deren Löslichkeit, Verdünnbarkeit oder/und Dispergierbarkeit in Wasser.

Beispiele für bevorzugte nachvemetzende Verbindungen umfassen Isocyanate und Isocyanurate. Diese können auf der Basis von 2,4- bzw. 2,6-Toluoldiisocyanat (TDI), 4,4'-Methylendi(phenyl)isocyanat (MDI) oder Hexamethylendiisocyanat (HDI) beruhen. Vorzugsweise werden Isocyanate und Isocyanurate auf Basis von HDI verwendet. Die nachvemetzenden Verbindungen reagieren mit den freien OH- und Polyol-Gruppen des UV-härtenden Harzes unter Bildung von Polyharnstoffen, die bekanntlich sehr beständige Verbindungen sind, und verwandten chemischen Verbindungen.

Ein Beispiel für Funktionen und Verbindungen, die mit der erfindungsgemäß eingesetzten nachvemetzenden Verbindung bei der Nachvemetzung reagieren, sind Hydroxylfunktionen, etwa in mehrwertigen Alkoholen, Polyetheralkoholen oder Polyesteralkoholen. Die Alkohole, insbesondere Polyetheralkohole und Polyesteralkohole, sind vorzugsweise oligomerer oder/und polymerer Natür.

Die Hydroxylfunktionen sind vorzugsweise chemisch an das Bindemittel gebunden, beispielsweise direkt oder über das organische Gerüst der vorstehend erwähnten Alkohole.

Die Hydroxylgehalte der radikalisch härtenden Bindemittel betragen häufig nach der UV-Härtung oft 0,2 bis 2 %. Die Molekulargewichte des radikalisch härtenden Bindemittels kann vor der UV-Härtung vorwiegend im Bereich von 500 bis 20000 liegen, nach der UV-Härtung vorwiegend im Bereich von 20000 bis 100000 und nach der Nachvernetzung meistens vorwiegend bei mindestens 100000.

Gemäß einer bevorzugten Ausführungsform der vorliegenden Erfindung wird ein Bindemittel, das über freie Hydroxylfunktionen verfügt, mit einem Isocyanat oder Isocyanurat als nachvemetzender Verbindung umgesetzt. Insbesondere wird dabei ein hydroxylgruppenhaltiges Polyurethan als Bindemittel eingesetzt. Diese Polyurethane können, wie vorstehend erwähnt, auf Basis TDI, MDI, HMDI oder/und HDI vorliegen; vorzugsweise sind sie auf Basis HDI.

Die erfindungsgemäße Vernetzung der OH-haltigen Bindemittel mit der nachvernetzenden Verbindung bewirkt weiterhin eine Erhöhung des Korrosionsschutzes der erhältlichen Beschichtung. Die freien Hydroxylgruppen wirken dagegen oftmals sogar korrosionsfördemd. Nach der Vernetzung liegen keine freien oder fast keine freien OH-Gruppen mehr vor, wodurch die korrosionsfördemde Wirkung beseitigt wird. Eine höherer Anteil an OH-Gruppen könnte die Korrosionsbeständigkeit etwas beeinträchtigen.

Unter aktinischer Strahlung ist solche Strahlung zu verstehen, deren Frequenzen bzw. Energie zur Aktivierung des Polymerisationsinitiators (= Photoinitiators) geeignet ist bzw. ausreicht. Sie sollte normalerweise mindestens die Energie bzw. die Frequenz des sichtbaren Lichts bzw. des UV-Lichts haben. Bevorzugt wird kurzwelliges sichtbares oder/und ultraviolettes Licht (UV-Licht). Naturgemäß ist jede Strahlung kürzerer Wellenlänge, also höherer Energie, ebenfalls geeignet. So kann z.B. auch Elektronenstrahlung eingesetzt werden, bei der kein Einsatz eines Photoinitiators erforderlich ist.

Als Verbindungen, die unter Bestrahlung freie Radikale bilden, insbesondere Photoinitiatoren, sind vor allem solche geeignet, die eine starke Absorption im Spektralbereich der eingesetzten Strahlung, insbesondere des nahen ultravioletten oder kurzwelligen sichtbaren Lichts, also etwa im Wellenlängenbereich von 180 bis 700 nm, aufweisen. Geeignet sind vor allem aromatische Carbonylverbindungen und deren Derivate, wie Chinone, Ketone und deren Ketale, zum Beispiel Benzildimethylketal, Benzoin, substituierte Benzoine und Benzoinether, α-Aminoketone; ferner mehrkernige Heterocyclen, wie Acridine, Phenazine und deren Substitutionsprodukte sowie substituierte Phosphinoxide wie zum Beispiel Bisacylphosphinoxide. Es können gleichzeitig mehrere Photoinitiatoren zugesetzt werden, die z.B. auf verschiedene Wellenlängen der UV-Strahlung spezifisch reagieren.

Ein weiterer wichtiger Bestandteil ist die mindestens eine elektrisch leitfähige Substanz, die vorzugsweise wasserunlöslich ist, wie z.B. anorganisches Pigment, insbesondere Korrosions- oder Rostschutzpigment, zum Beispiel in Form von Oxiden, Phosphiden oder/und Phosphaten jeweils von Aluminium, Eisen, Kupfer, Mangan, Molybdän oder/und deren Mischungen bzw. deren gemeinsamen Verbindungen wie z.B. Doppeloxiden oder/und von anderen elektrisch leitfähigen Pigmenten wie zum Beispiel Graphit oder/und Graphit-Glimmerpigmenten. Bevorzugt sind Eisenphosphid oder/und magnetisches Eisenoxid, insbesondere auf Basis von Fe₃O₄. Graphit kann hierbei auch als Trockenschmierstoff wirken. Magnetisches Eisenoxid hat eine sehr hohe elektrische Leitfähigkeit. Je höher die elektrische Leitfähigkeit eines Pigments ist, desto geringer kann sein Anteil in dem Beschichtungsgemisch bzw. im polymeren Überzug ausfallen, ohne die Schweißbarkeit herabzusetzen. Die mindestens eine elektrisch leitfähige Substanz, insbesondere mindestens ein Pigment, kann allein oder als Gemisch eingesetzt werden. Das Pigment muß nicht farbig, grau oder schwarz sein, sondem kann auch farblos, weiß oder schwach färbend wirken. Vorzugsweise liegt die mindestens eine elektrisch leitfähige Substanz in Form von Partikeln, insbesondere länglichen oder plättchenförmigen Partikeln, ggf. in Form von Kristallen, Kristallaggregaten oder Agglomeraten vor. Die mittlere Größe der Partikel vor dem Einmischen in das Beschichtungsgemisch liegt vorzugsweise im Bereich von 10 nm bis 20 µm, besonders bevorzugt oberhalb von 30 nm bzw. unterhalb von 12 µm, ganz besonders bevorzugt oberhalb von 60 nm bzw. unterhalb von 10 µm, insbesondere oberhalb von 0,1 µm bzw. unterhalb von 8 µm. Auch wenn die bevorzugte Dicke der ausgehärteten Trockenfilmschicht oft nur im Bereich von 3 bis 9 µm liegt, können die elektrisch leitfähigen Partikel eine mittlere Partikeigröße oder/und eine maximale Partikelgröße, jeweils gemessen unter dem Rasterelektronenmikroskop, aufweisen, die größer ist als die durchschnittliche Trockenfilmschichtdicke der ausgehärteten Schicht. Anstelle oder zusätzlich zu mindestens einem anorganischen Pigment können elektrisch leitfähige Polymere eingesetzt werden wie z.B. Polyaniline.

Es können Additive mit den unterschiedlichsten Aufgaben bzw. Zusammensetzungen eingesetzt werden. Der Anteil an Additiven neben radikalisch polymerisierbaren Bindemitteln, nachvemetzenden Bindemitteln, elektrisch leitfähigen Pigmenten, Wasser und ggf. organischem Lösemittel kann 0,5 bis 50 Gew.% bezogen auf die Zusammensetzung des Naßlacks einschließlich der Flüssigkeiten, vorzugsweise 2 bis 20 Gew.-%, betragen.

Feinteilige Pulverqualitäten wie z.B. hydrophobe Kieselsäure kann zur Stabilisierung der Suspension, die aufgrund des hohen Gehalts an Pigmenten leicht zum Absetzen neigen kann, und zur Auflockerung von Bodensatz in Gefäßen dienen, damit der Bodensatz nicht verkrustet und leicht gelöst werden kann.

Korrosionsschutzpigmentzusätze wie z.B. auf Basis von Oxid, Phosphat oder/und Silicat bzw. auf Basis von deren Erdalkali-, Eisen-, Mangan, Silicium- und Zinkverbindungen, insbesondere von Calciumverbindungen, können den Korrosionsschutz verstärken.

Additive wie z.B. auf Basis von Silan bzw. Siloxan können die Oberflächenqualität der Beschichtung verbessem, da sie die Gleitfähigkeit der Beschichtung fördem. Sie können zusätzlich die Hydrophobizität des Gemisches verstärken und als Entschäumer wirken, um Mikroporen zu vermeiden und können somit beitragen, eine möglichst porenfreie Beschichtung mit einer möglichst porenfreien, also geschlossenen Beschichtungsoberfläche zu erzeugen.

Um eine vorzeitige Polymerisation der Beschichtungsgemische zu verhindern, enthalten diese oft kleine Mengen an Polymerisationsinhibitioren, zum Beispiel Hydrochinon und dessen Derivate und tert.-Butylphenole. Derartige Inhibitoren sind oft bereits in den käuflichen polymerisierbaren Verbindungen enthalten.

Wenn die polymere Beschichtung weder bei der Herstellung, noch bei der Weiterverarbeitung und auch nicht im Einsatz auf Temperaturen etwa über 50 °C, über 80 °C bzw. über 110 °C - der Erweichungs- oder Schmelztemperatur des jeweiligen Wachses - erhitzt wird und wenn die Beschichtung hierdurch nicht in der Verklebbarkeit für den Verarbeitungs- oder Einsatzzweck beeinträchtigt wird, so kann auch ein Zusatz von Wachs insbesondere als Polyethylenwachs zugesetzt werden, der als Umformhilfe dienen kann.

Die Gemische enthalten normalerweise ferner Beschichtungshilfsmittel, zum Beispiel oberflächenaktive Substanzen, insbesondere Polysiloxane, Silane oder/und siliciumfreie oligomere oder/und polymere Tenside. Sie können ferner Entschäumer, Haftvermittler, Katalysatoren, Korrosionsinhibitoren, Pigmente zur Steigerung der Korrosionsbeständigkeit und ggf. auch Farbstoffe oder/und Farbpigmente enthalten.

Ein Zusatz von Schichtverbindungen wie z.B. Schichtsilicaten kann dazu helfen, den Fluß der Wasserstoffionen zur metallischen Oberfläche zu verringern bzw. zu unterbinden, was für den Korrosionsschutz förderlich ist.

Die Mengenanteile der Bestandteile des Beschichtungsgemisches können innerhalb der folgenden Bereiche liegen:

Die Beschichtungsgemisch kann gänzlich oder weitgehend wasserfrei sein, wenn ein Anteil an organischem Lösemittel enthalten ist. Bei z.B. 1 oder 5 Gew.% Wasser ist ein Gehalt an organischem Lösemittel im Bereich von 20 bis 40 Gew.-% bevorzugt. Bei z.B. 8 Gew.% Wasser ist ein Gehalt an organischem Lösemittel im Bereich von 15 bis 35 Gew.-% bevorzugt.

Wasser im allgemeinen im Bereich von 10 bis 50 Gew.-%, bevorzugt im Bereich von 15 bis 40 Gew.%, insbesondere im Bereich von 20 bis 30 Gew.-%.

Organische(s) Lösemittel im allgemeinen im Bereich von 0 bis 50 Gew.%, bevorzugt im Bereich von 1 bis 30 Gew.-%, insbesondere im Bereich von 2 bis 12 Gew.%, hier berechnet in Bezug auf den Gehalt an Wasser im Gemisch.

Bindemittel im allgemeinen im Bereich von 10 bis 30 Gew.-%, bevorzugt im Bereich von 15 bis 25 Gew.-%, insbesondere im Bereich von 17 bis 23 Gew.-%.

Elektrisch leitfähige Substanzen wie z.B. Pigment(e) im allgemeinen im Bereich von 30 bis 75 Gew.%, bevorzugt im Bereich von 35 bis 60 Gew.-%, insbesondere im Bereich von 40 bis 48 Gew.%. Die Gehalte an elektrisch leitfähigen Pigmenten können ebenso wie die Gehalte an solchen auf Basis magnetischem Eisenoxid, Eisenphosphid oder/und Graphit auch bei mehr als 50 Gew.-% liegen. Die Gehalte an Graphit und Eisenphosphid können vorzugsweise 25 bis 70 Gew.% betragen, besonders bevorzugt mindestens 28 bzw. bis zu 65 Gew.%, insbesondere mindestens 30,45 bzw. bis zu 62,5 Gew.%. Die Gehalte an Graphit, magnetischem Eisenoxid und Eisenphosphid können vorzugsweise 25 bis 70 Gew.% betragen, besonders bevorzugt mindestens 30 bzw. bis zu 65 Gew.%, insbesondere 35 bis 62,5 Gew.-%. Das Verhältnis des Anteils an magnetischem Eisenoxid zu Eisenphosphid beträgt bevorzugt bis zu 15,4 Gew.%. Das Verhältnis an Graphit zu Eisenphosphid beträgt bevorzugt bis zu 3,08 Gew.-%.

Nachvemetzende Verbindung(en) im allgemeinen im Bereich von 1 bis 20 Gew.-%, bevorzugt im Bereich von 1 bis 10 oder 2 bis 10 Gew.%, insbesondere im Bereich von 3 bis 6 Gew.%, jeweils entweder nur unverkappte oder nur verkappte nachvemetzende Verbindungen.

Photoinitiator(en) im allgemeinen im Bereich von 1 bis 60 Gew.%, bevorzugt im Bereich von 2 bis 24 Gew.-%, insbesondere im Bereich von 2,5 bis 3,5 Gew.-%. Wachs(e) oder/und wachsartige Substanz(en) im allgemeinen im Bereich von 0 bis 15 Gew.%, bevorzugt im Bereich von 0,5 bis 10 Gew.-%, insbesondere im Bereich von 1 bis 6 Gew.-%.

Additiv(e) im allgemeinen im Bereich von 0,01 bis 5 Gew.-%, meist im Bereich von 0,1 bis 4 Gew.%, vorzugsweise im Bereich von 0,3 bis 3 Gew.-%, besonders bevorzugt im Bereich von 0,5 bis 2 Gew.%. Korrosionsschutzpigment wie z.B. Silicatpigment ist bevorzugt bis zu einem Gehalt von 4 Gew.% enthalten. Der Gehalt an Stabilisatoren wie z.B. hydrophobe Kieselsäure beträgt bevorzugt bis zu 0,5 Gew.-%.

Das Gewichtsverhältnis der elektrisch leitfähigen Substanz(en) zu den Bindemitteln kann insbesondere im Bereich von 1 : 1 bis 5 : 1, vorzugsweise im Bereich von 1,5 : 1 bis 4 : 1, variiert werden. Durch die Anhebung des Anteils der elektrisch leitfähigen Substanz(en), die in weitem Bereich erfolgen kann, kann die Schweißbarkeit noch sehr deutlich gesteigert werden. In vielen Fällen wird jedoch eine Optimierung von verschiedenen Eigenschaften des erzeugten Trockenfilms wie z.B. Schweißbarkeit, Härte, Festigkeit, Elastizität, chemische Beständigkeit, Umformbarkeit, Gleitverhalten, Klebbarkeit, Korrosionsbeständigkeit und Lackhaftung gewählt, die den meisten oder allen Eigenschaften gerecht wird.

Die Beschichtungsgemische werden im allgemeinen durch Vermahlen bzw. Vermischen von wasserunlöslichen Pigmentpartikel mit den übrigen wasserlöslichen, wasserverdünnbaren bzw. wasserdispergierbaren Bestandteilen zu einer homogenen niedrigviskosen Masse hergestellt. Das Vermählen kann als homogenes Untermischen z.B. in einer Perlmühle erfolgen, bei dem beispielsweise ein Bindemittel-Wasser-Gemisch, das auch organisches Lösemittel enthalten kann, mit den Pigmenten vermischt wird. Die Viskosität sollte in einem Bereich liegen, der ein gleichmäßiges Aufbringen zu einer dünnen, etwa 5 bis 25 µm, vorzugsweise 6 bis 22 µm, besonders bevorzugt 10 bis 20 µm dicken Schicht des flüssigen Überzugsgemisches erlaubt. Beim Eintrocknen dieses Flüssigfilmes ergibt sich dann eine Trockenfümschichtdicke im Bereich von 0,5 bis 15 µm, vorzugsweise im Bereich von 1 bis 10 µm, besonders bevorzugt im Bereich von 2 bis 8 µm, vor allem im Bereich von 3 bis 7 µm. Bei der Bestimmung dieser Schichtdicke bleiben die Spitzen der oft aus der polymeren Masse herausragenden Pigmentpartikel vorwiegend unberücksichtigt. Die Bestimmung der Trockenfilmschichtdicke erfolgt vorzugsweise gravimetrisch (Schichtgewichtsbestimmung) oder im β-Rückstrahlverfahren.

Das Bindemittelgemisch muß zum Beschichten eine geeignete Viskosität aufweisen. Das ist auch notwendig, um die geringen gewünschten Überzugsschichtdicken mit möglichst geringen Dickenschwankungen gleichmäßig auftragen zu können. Die Viskosität des Partikel enthaltenden Überzugsgemisches weist bei 25 °C vorzugsweise eine Viskosität im Bereich von 100 bis 1000 mPas auf.

Die Viskosität kann durch Wahl der Art und Menge vor allem des Bindemittels und des Wassers eingestellt werden. Sie liegt im allgemeinen im Bereich von 200 bis 6000 mPas, insbesondere im Bereich von 500 bis 5000 mPas, gemessen bei 25 °C ohne Partikelgehalt. Wenn die Viskosität des partikelfreien Überzugsgemisches zu hoch ist, wird der ausgebildete Flüssigkeitsfilm zu dick. Ist sie jedoch zu niedrig, läuft der Flüssigkeitsfilm weg und ist auch mit einem sogenannten Rollcoater nicht gut zu applizieren.

Die zu beschichtende metallische Unterläge ist bevorzugt ein Band oder ein Blech, das in vielen Fällen im wesentlichen aus Stahl, verzinktem oder AlZn-beschichtetem Stahl oder einer Aluminiumlegierung besteht und eine Dicke der metallischen Unterlage im Bereich von 0,15 bis 10 mm, insbesondere von etwa 0,2 bis 1,6 mm, aufweist.

Insbesondere wird ein Band, ein Blech oder eine Platte verwendet, das zur Herstellung z.B. von Automobilkomponenten geeignet ist. Die erfindungsgemäße Beschichtung kann auf herkömmliche Weise aufgebracht werden. Dazu muß eine polymere Oberfläche weitestgehend sauber sein. Andererseits wird dazu die metallische Oberfläche z.B. eines Bandes normalerweise vorher elektrolytisch beschichtet oder feuerverzinkt und danach mit einer wässerigen Vorbehandlungslösung vorbehandelt, wobei diese Vorbehandlung bisher häufig eine Chromatierung oder/und Phosphatierung ist. Falls keine Zink-haltige Legierung aufgebracht wird oder diese metallische Beschichtung zur Vorbehandlung nicht mehr frisch aufgebracht ist, empfiehlt sich ein Reinigen, Beizen oder/und Aktivieren vor der Beschichtung mit der Vorbehandlungslösung. Es ist jedoch bevorzugt, daß die Vorbehandlungslösung weitgehend oder gänzlich chromfrei ist. Es ist ferner bevorzugt, daß die Vorbehandlungslösung weitgehend oder gänzlich frei ist von Kobalt, Kupfer oder/und Nickel oder sogar frei von allen Arten von Schwermetallen ist. Auch nicht vorbehandelte metallische Substrate können eingesetzt werden. Auf diese gegebenenfalls vorbehandelte Oberfläche wird dann die schweißbare Beschichtung gemäß der Erfindung aufgebracht.

Bezüglich der beim Schweißen durchzukontaktierenden Punkte ist zu berücksichtigen, daß beim Schweißkontakt von zwei Blechen meistens 2, 3 oder sogar 4 polymere Überzüge durchzukontaktieren sind. Je dicker die einzelnen polymeren Schichten sind, desto besser muß die elektrische Leitfähigkeit dieser Schichten sein, um eine gute Durchkontaktierung und eine längere Lebensdauer der Schweißelektroden zu ermöglichen. Daher wirkt sich z.B. bei 4 polymeren Überzügen auf zwei Blechen beim Schweißen auf den elektrischen Widerstand deutlich aus, ob die einzelnen Überzüge nur eine Schichtdicke von 4 oder von 8 µm aufweisen. Außerdem können auch die Bleche sowie die metallischen Überzüge, auf den Schichten und ggf. auch dickere Vorbehandlungsschichten einen nennenswerten Beitrag zur Erhöhung des elektrischen Widerstandes der zwei übereinanderliegenden beschichteten Bleche leisten.

Generell ist das Band oder Blech in Form von Rollen, sogenannten Coils, aufgewickelt. Zum Aufbringen der erfindungsgemäßen Beschichtung wird ggf. ein Coil abgewickelt und nach erfolgter Beschichtung wieder zum Coil aufgewickelt. Das Aufbringen von Beschichtungen erfolgt zweckmäßig im kontinuierlichen Verfahren. Mit dem erfindungsgemäßen Beschichtungsgemisch ist es aber auch möglich, im sogenannten Inline-Verfahren zu arbeiten. Das Band oder Blech wird in der Produktionsstraße üblicherweise elektrolytisch verzinkt oder feuerverzinkt und danach vorbehandelt z.B. chromatiert oder/und phosphatiert - und kann daran anschließend erfindungsgemäß beschichtet werden. Erst nach erfolgter polymerer Beschichtung wird das Band zu einem Coil aufgewickelt. Selbstverständlich kann auch ein nicht vorbehandeltes metallisches Material erfindungsgemäß beschichtet werden.

Bei dem erfindungsgemäßen Beschichtungsverfahren durchläuft z.B. das metallische Band eine Beschichtungs- und danach mindestens eine Härtungsstation. Die Beschichtung kann durch Besprühen z.B. durch Schlitzdüsen, durch Spritzen, durch Tauchen oder/und durch Walzenauftrag erfolgen. Die Walzenbeschichtung wird im allgemeinen bevorzugt. Die polymere Beschichtung erfolgt vorzugsweise bei Raumtemperatur oder bei leicht darüberliegender Temperatur, d. h. bei Temperaturen im Bereich von etwa 20 bis 40 °C, wobei das Material und die Substratoberfläche vorzugsweise eine Temperatur im Bereich von 20 bis 30 °C aufweisen. Das Gemisch wird bevorzugt so aufgetragen, daß die resultierende Trockenfilmschichtdicke im Bereich von 3 bis 12 µm, insbesondere im Bereich von 4 bis 90 µm, liegt.

Nach der Beschichtung kann das Abdampfen des Wasseranteils im Umluftofen im allgemeinen bei 30 bis 80 °C Substrattemperatur erfolgen, vorzugsweise bei 40 bis 60 °C, was jedoch von der vor allem von der Substratdicke abhängt. Die Trocknung kann in einem Zeitraum im allgemeinen von 1 bis 30 sec, vorzugsweise von 3 bis 20 sec, besonders bevorzugt von 5 bis 15 sec, durchgeführt werden, um die anschließende UV-Härtung zu ermöglichen. Wenn das Band schneller betrieben wird, dann wird üblicherweise eine höhere Substrattemperatur benötigt. Das erfindungsgemäße Verfahren kann aufgrund der nur teilweisen Vernetzung mit aktinischer Strahlung eher schneller als konventionell betrieben werden, z.B. bei mindestens 75 m/min oder sogar bei mindestens 125 m/min.

Nach dem Abdampfen erfolgt die Härtung, vorteilhaft im Durchlauf durch eine Härtungsstation. Dort wird das Band gegebenenfalls unter einer Inertgasatmosphäre, wie zum Beispiel Stickstoff, und in einem Abstand von wenigen Zentimetem unter einer Strahlungsquelle hindurchgeführt, die vorzugsweise etwa der gesamten Breite des Bands entspricht. Die Bandgeschwindigkeit kann insbesondere abhängig von Schichtdicke, Lichtempfindlichkeit der Schicht, Lampenabstand und Lampenleigtung gewählt werden. Sie kann weiter davon abhängig sein, ob die Bestrahlung in Luft oder aber in Stickstoff erfolgt. Sie kann nach Wunsch durch Anbringen von zwei oder mehreren hintereinanderliegenden Strahlungsquellen beschleunigt werden. Es können mit dem erfindungsgemäßen Gemisch Bandgeschwindigkeiten bis zu etwa 200 m/min erreicht werden. Bevorzugte Bandgeschwindigkeiten liegen zur Zeit eher im Bereich von 80 bis 140 m/min.

Als Strahlungsquellen werden bevorzugt UV-Lichtquellen wie Gasentladungslampen, Xenonlampen oder Natriumdampflampen eingesetzt, die Emissionsmaxima im Spektralbereich von etwa 180 bis 700, insbesondere im Bereich von 200 bis 600 nm und eine Lampenleistung von 160 bis 240 Watt/cm aufweisen. Auch Lampen, die im wesentlichen im kurzweiligen sichtbaren Bereich von etwa 400 bis 550 nm emittieren, können verwendet werden. Grundsätzlich kann auch Strahlung höherer Energie, zum Beispiel Elektronenstrahlung, zur Härtung eingesetzt werden. Die aktinische Bestrahlung erfolgt, ebenso wie die Beschichtung, vorzugsweise bei Umgebungstemperaturen, die nicht oder nicht wesentlich oberhalb Raumtemperatur, also im allgemeinen nicht oberhalb etwa 50 °C liegen. Die bestrahlte Schichtoberfläche erreicht dabei oft Temperaturen im Bereich von 60 bis zu etwa 80 °C durch die UV-Anregung, die einen Anteil IR-Strahlung aufweist.

Bei Substrattemperaturen von im allgemeinen 30 bis 80 °C, vorzugsweise 40 bis 60 °C, tritt zusätzlich die erfindungsgemäße Nachvernetzung ein. Vorzugsweise macht der Anteil der aktinischen Härtung 40 bis 80 % der Vernetzung aus. Es werden durch die Kombination der aktinischen Härtung und der vorwiegend chemischen Nachvemetzung besonders korrosionsschützende, haftfeste und sehr gut umformbare Schichten erzielt.

Die Schichtzusammensetzung und die Härtungsbedingungen sollten so gewählt werden, daß eine harte, feste, korrosionsresistente Schicht erhalten wird, die aber ausreichend zähelastisch ist, so daß eine Verformung der Unterlage, zum Beispiel des Stahlblechs, ohne Sprödungsrisse in der Korrosionsschutzschicht gewährleistet ist. Sie ist zum Verkleben oder Zusammenschweißen mit anderen Teilen hervorragend geeignet. Das Überzugsgemisch kann als Schweißprimer bezeichnet werden.

Die Herstellung der Korrosionsschutzschicht nach dem erfindungsgemäßen Verfahren ermöglicht eine breite Variation der Schichtdicke innerhalb des oben angegebenen Bereichs. Die Schicht haftet fest und dauerhaft auf der Unterlage; sie kann in. üblicher Weise, zum Beispiel durch kathodische Tauchlackierung, überlackiert werden und weist eine glatte, gleitfähige Oberfläche auf.

Bei einer Dicke der ausgehärteten Schicht im Bereich von 3 bis 12 µm, vorzugsweise im Bereich von 4 bis 10 µm, werden mehr oder weniger als etwa 1000 Schweißpunkte je Elektrodenpaar in Abhängigkeit von der Art der metallischen Substrate erreicht, insbesondere im Schweißbereich von etwa 1,5 kA, in Abhängigkeit von der Art des metallischen Substrats, bevor die Elektrode ausgetauscht bzw. nachgefräst werden muß. Hierzu sollte der ausgehärtete Trockenfilm einen elektrischen Widerstand von möglichst weniger als 250 µΩ aufweisen.

Die erfindungsgemäß erhaltenen korrosionsgeschützten Bleche ("coil-coated steel") werden dann zum Weiterverarbeiter, in der Regel einem Automobilhersteller, transportiert. Sie können dort zwischengelagert werden.

Die Bleche werden wieder abgewickelt und je nach Bedarf gestanzt, umgeformt und verschweißt oder verklebt. Aufgrund der Eigenschaften des erfindungsgemäßen Beschichtungsgemischs wird eine sehr gute Umformbarkeit - sowohl mit, als auch ohne Ziehöl und eine sehr gute Schweißbarkeit erreicht. Nach erfolgter Beschichtung werden die Teile je nach Bedarf weiterbehandelt, z.B. alkalisch gereinigt und weiter beschichtet, beispielsweise durch kathodische Tauchlackierung. Danach kann z.B. das derart beschichtete Blech bzw. eine derart beschichtete Baugruppe mit einem Füller und danach mit einem Topcoat lackiert werden.

Das erfindungsgemäße Gemisch ermöglicht das Einbringen hoher Pigmentkonzentrationen in die daraus erhältlichen Beschichtungen. Dies ist mit herkömmlichen polymeren Gemischen bei dieser Bandgeschwindigkeit häufig nicht möglich. Durch den hohen Anteil an elektrisch leitfähigen Pigmenten bzw. elektrisch leitfähigen Polymeren wird auch bei hohen Schichtdicken eine gute Schweißbarkeit erreicht. Dies ist insbesondere bei der Beschichtung von chromatfrei vorbehandelten metallischen Unterlagen, beispielsweise Stahlbändern und -blechen, von Vorteil. Die erfindungsgemäßen Beschichtungsgemische eignen sich daher besonders zur Beschichtung von Stahlbändern und -blechen, die elektrolytisch verzinkt oder feuerverzinkt und vorzugsweise chromatfrei vorbehandelt wurden, gegebenenfalls aber auch nicht verzinkt sind. Weiterhin gestatten die erfindungsgemäßen Gemische durch die Nachvemetzung eine hohe Bandgeschwindigkeit bei der Beschichtung des metallischen Substrats.

Durch den erhöhten Anteil einer Nachvemetzung anstelle alleiniger aktinischer Aushärtung kann mit dem erfindungsgemäßen Verfahren auch die Installation zusätzlicher UV-Lampen unnötig sein, was sonst oft zum Erreichen hoher oder noch höherer Bandgeschwindigkeiten durchgeführt wird. Dadurch können hohe Investitionskosten gespart werden. Auch die Energiebilanz wird aufgrund des Gehalts nachvemetzender Verbindungen günstiger. Mit dem erfindungsgemäßen Verfahren kann trotz einer weiter erhöhten Bandgeschwindigkeit mit in etwa gleichbleibenden Energie-, Material- und Verfahrenskosten gearbeitet werden. Durch den erhöhten Anteil einer Nachvemetzung anstelle alleiniger aktinischer Aushärtung können mit dem erfindungsgemäßen Verfahren auch weit höhere Trockenfilmschichtdicken, trotz hoher Bandgeschwindigkeiten, durchgehärtet werden. Dies wird dadurch noch verstärkt, daß der Anteil der Oligomere bzw. Polymere, die vernetzt werden sollen, insbesondere aufgrund eines hohen Anteils an elektrisch leitfähiger/leitfähigen Substanz(en), vergleichsweise gering ist, und auch deswegen einer vergleichsweise geringen aktinischen Strahlungsleistung bedarf.

Die Aufgabe wird außerdem gelöst durch ein Verfahren zur Aushärtung einer Polymerschicht, die aufgrund des hohen Pigmentgehalts und ihrer Schichtdicke nicht über die ganze Schichtdicke mit aktinischer Strahlüng durchstrahlt werden kann und daher nicht allein mit aktinischer Strahlung durchgehärtet werden kann, wobei einer UV-Härtung eine chemische Nachvemetzung folgt, die ggf. durch thermischen Einfluß beschleunigt bzw. verstärkt werden kann, wobei die Polymerschichten weitgehend oder vollständig durchgehärtet werden. Die dabei durchhärtende Schichtdicke kann mindestens 5 µm und insbesondere bis zu 200 µm betragen. Der Gehalt an Pigmenten kann hierbei mindestens 16 Gew.%, vorzugsweise mindestens 24 Gew.-%, insbesondere mindestens 32 Gew.% betragen, bezogen auf die Zusammensetzung des Naßlacks.

Aufgrund der Kombination der UV-Härtung mit der chemischen Aushärtung, die ggf. durch thermischen Einfluß beschleunigt bzw. verstärkt werden kann, ist es möglich, Beschichtungen durchzuhärten, die aufgrund des hohen Pigmentgehalts der Polymerbeschichtung und aufgrund ihrer Schichtdicke nicht mehr über die ganze Schichtdicke mit UV-Strahlung durchstrahlt werden können und daher auch nicht durchhärten können, über das ganze Volumen gänzlich oder im wesentlichen durchzuhärten. Je stärker die Polymerschicht die aktinische Strahlung, insbesondere UV-Strahlung, absorbiert, was mit dem Gehalt an Pigmentteilchen verbunden sein kann, desto größer ist die Notwendigkeit der chemischen Nachvemetzung. Das gilt in entsprechender Weise, je dicker die Polymerschicht ist. Daher können jetzt Polymerbeschichtungen ausgehärtet werden mit einer Schichtdicke im Bereich von 5 bis 200 µm, die mit aktinischer Strahlung, aber ohne chemische Nachvemetzung nur partiell aushärten können.

Das erfindungsgemäße Überzugsgemisch weist nach der Aushärtung aufgrund des hohen Vemetzungsgrades eine verbesserte Beständigkeit gegen korrosive Medien wie z.B. Salzlösungen und gegen Alkalien, insbesondere aufgrund des Isocyanat/lsocyanurat-Systems, gegen organische Lösemittel auf. Der erfindungsgemäße ausgehärtete Trockenfilm weist auch bei niedrigen Schichtdicken eine sehr hohe Korrosionsbeständigkeit auf. Er zeigte eine sehr gute Verklebbarkeit zwischen den polymer beschichteten Oberflächen.

Es scheint mit diesem chemischen System erstmalig gelungen zu sein, einen schweißfähigen Primer entwickelt zu haben, der in der Serienfertigung, insbesondere in Bandanlagen hoher Geschwindigkeit, erfolgreich eingesetzt werden kann.

Überraschenderweise konnte der Bedarf der UV-Strahlungsleistung durch die Verwendung von nachversetzenden Verbindungen bereits bei den ersten Ansätzen um 30 bis 40 % und später um 60 bis 70 % gesenkt werden. Das spricht für das hohe Potential zur Verringerung der Bandgeschwindigkeit. Dabei wies der ausgehärtete Trockenfilm eine hohe Verformbarkeit auf, obwohl er nicht primär zum Umformen ausgelegt war.

Die erfindungsgemäß beschichteten metallischen bzw. polymeren Unterlagen können insbesondere eingesetzt werden in der Fahrzeug-, Luft- und Raumfahrtindustrie, im Bauwesen, für Außenverkleidungen, Dachverkleidungen und im Innenausbau, für den Maschinen- und Apparatebau, für Schrankelemente, Regale und Haushaltsgeräte.

Erfindungsgemäß kann ein Draht, Band oder Teil beschichtet werden, wobei das zu beschichtende Substrat vorzugsweise ein Draht, eine Drahtwicklung, ein Drahtgeflecht, ein Stahlband, ein Blech, eine Verkleidung, eine Abschirmung, eine Karosserie oder ein Teil einer Karosserie, ein Teil eines Fahrzeugs, Anhängers, Wohnmobils oder Flugkörpers, eine Abdeckung, ein Gehäuse, eine Lampe, eine Leuchte, ein Ampelelement, ein Möbelstück oder Möbelelement, ein Element eines Haushaltsgeräts, ein Gestell, ein Profil, ein Formteil komplizierter Geometrie, ein Leitplanken-, Heizkörper- oder Zaunelement, eine Stoßstange, ein Teil aus oder mit mindestens einem Rohr oder/und einem Profil, ein Fenster-, Tür oder Fahrradrahmen oder ein Kleinteil wie z.B. eine Schraube, Mutter, Flansch, Feder oder ein Brillengestell ist.

### Beispiele und Vergleichsbeispiele:

Die folgenden Beispiele, die in den Tabellen wiedergegeben sind, erläutern bevorzugte Ausführungsformen des erfindungsgemäßen Verfahrens.

Beim Anmischen einer Zusammensetzung wurde zuerst die radikalisch härtende Verbindung vorgelegt. Hierzu wurden alle weiteren Additive in einem vorgemischten Zustand zugegeben (3. bis 7.) und gerührt. Die Pigmente (8. bis 11.) sowie der Stabilisator für die Suspension (12.) wurden anschließend eingerührt und hochtourig dispergiert. Dieses Gemisch wurde dann in einer Perlmühle auf eine Feinheit von 5 bis 20 µm heruntergemahlen. Schließlich wurde die Viskosität mit einer geringen Zugabe an VE-Wasser eingestellt. Gegebenfalls wurde der pH-Wert durch Zusatz von Ammoniak auf den erforderlichen Wert im Bereich von 8 bis 9 eingestellt. Danach wurde das Gemisch durch ein Sieb von 40 µm Maschenweite gegeben. Die nachvernetzende Verbindung (2.) wurde jeweils direkt vor der Verarbeitung zu diesem Gemisch zugegeben.

Der Auftrag des mit der nachvemetzenden Verbindung versehenen, fertigen Gemisches wurde auf ein chromatfreies, mit Zirkonhexafluorid vorbehandeltes, feuerverzinktes Stahlblech mit einem 7 µm-Rakel aufgerakelt. Der Wassergehalt wurde bei 60 °C über 10 bis 15 s abgetrocknet und anschließend UV-gehärtet mit je einer UV-CK1- und UV-CK-Lampe bei 40 m/min Bandgeschwindigkeit und bei 160 W/cm Lampenleistung pro Lampe. Die Schichtdicken der UV-gehärteten Überzüge lagen im Bereich von 2 bis 10 µm. Die Nachvemetzung, die außer bei den Beispielen mit verkappten nachvemetzenden Verbindungen durch den Wärmeeinfluß der UV-Bestrahlung sofort einsetzte, wurde nicht durch zusätzliche thermische Energie beschleunigt. Die Nachvernetzung der Beschichtung erfolgte während des Abkühlens der Bleche über ca. 24 h verstärkt, bei der die Substrattemperatur oberhalb von 40 °C lag. Nach zwei Tagen war die Nachvemetzung im wesentlichen abgeschlossen. Nach dieser Zeit waren die derart beschichteten Bleche noch nicht vollkommen ausgehärtet. Nach einer Lagerung von mehr als 10 Tagen waren die erfindungsgemäß behandelten Bleche nahezu vollständig vernetzt und zeigten die in den Tabellen 2 und 3 aufgeführten Eigenschaften. Die Berechnungen basieren auf der Zusammensetzung des Naßlacks und enthalten daher Wasser und ggf. auch organisches Lösemittel in der auf 100 Gew.-% berechneten Zusammensetzung. Die Trockenfilmschichtdicke wurde gravimetrisch bestimmt.

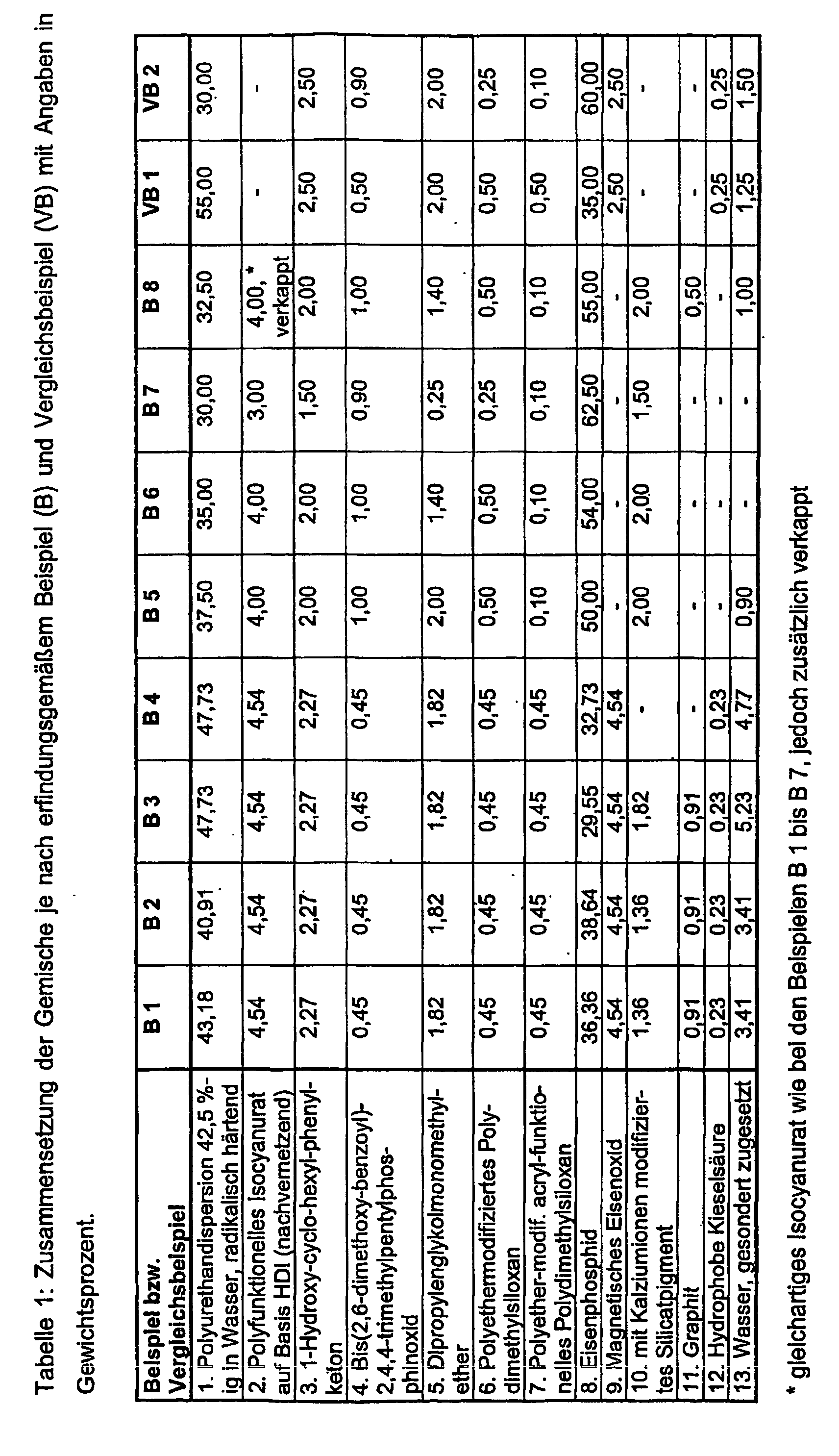

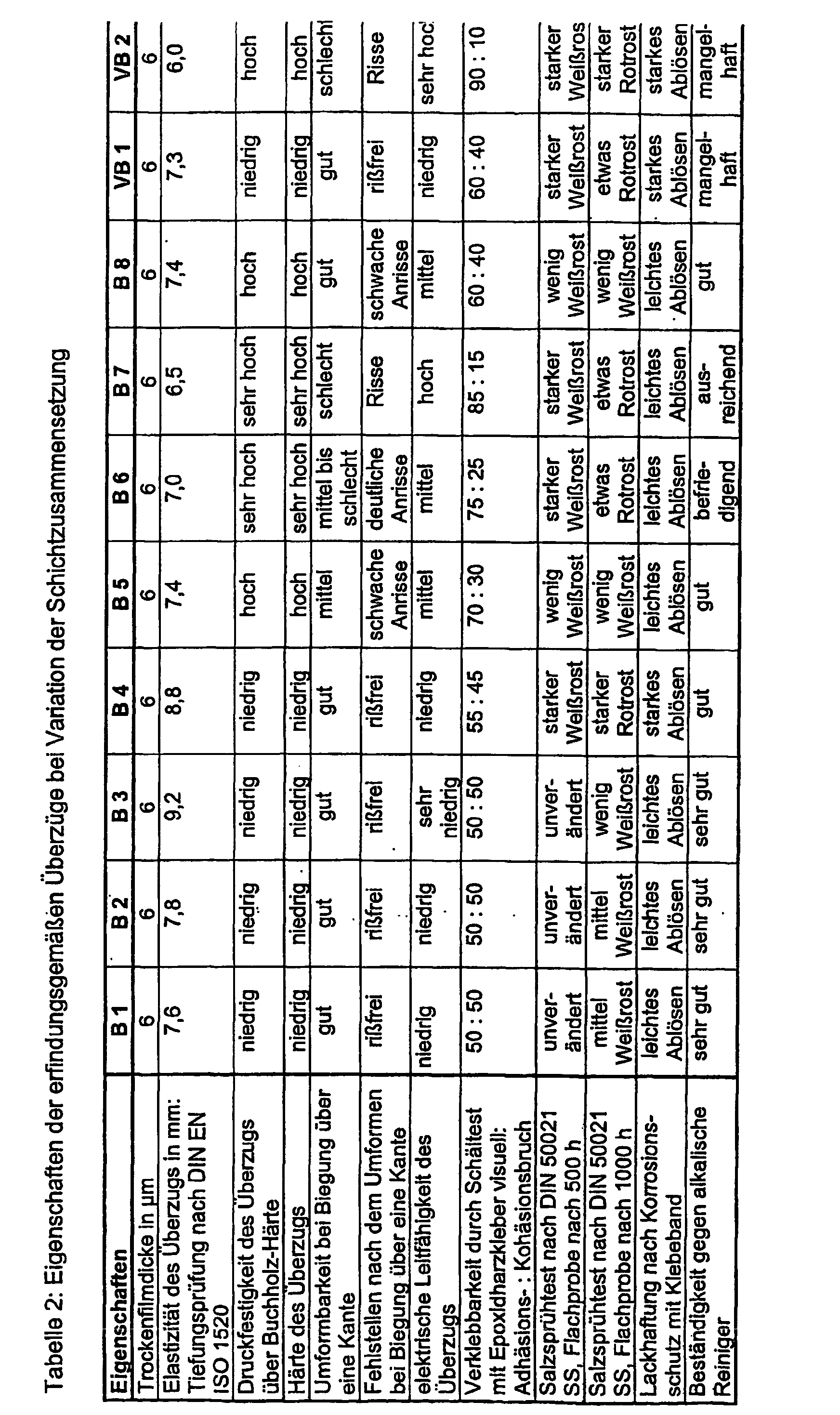

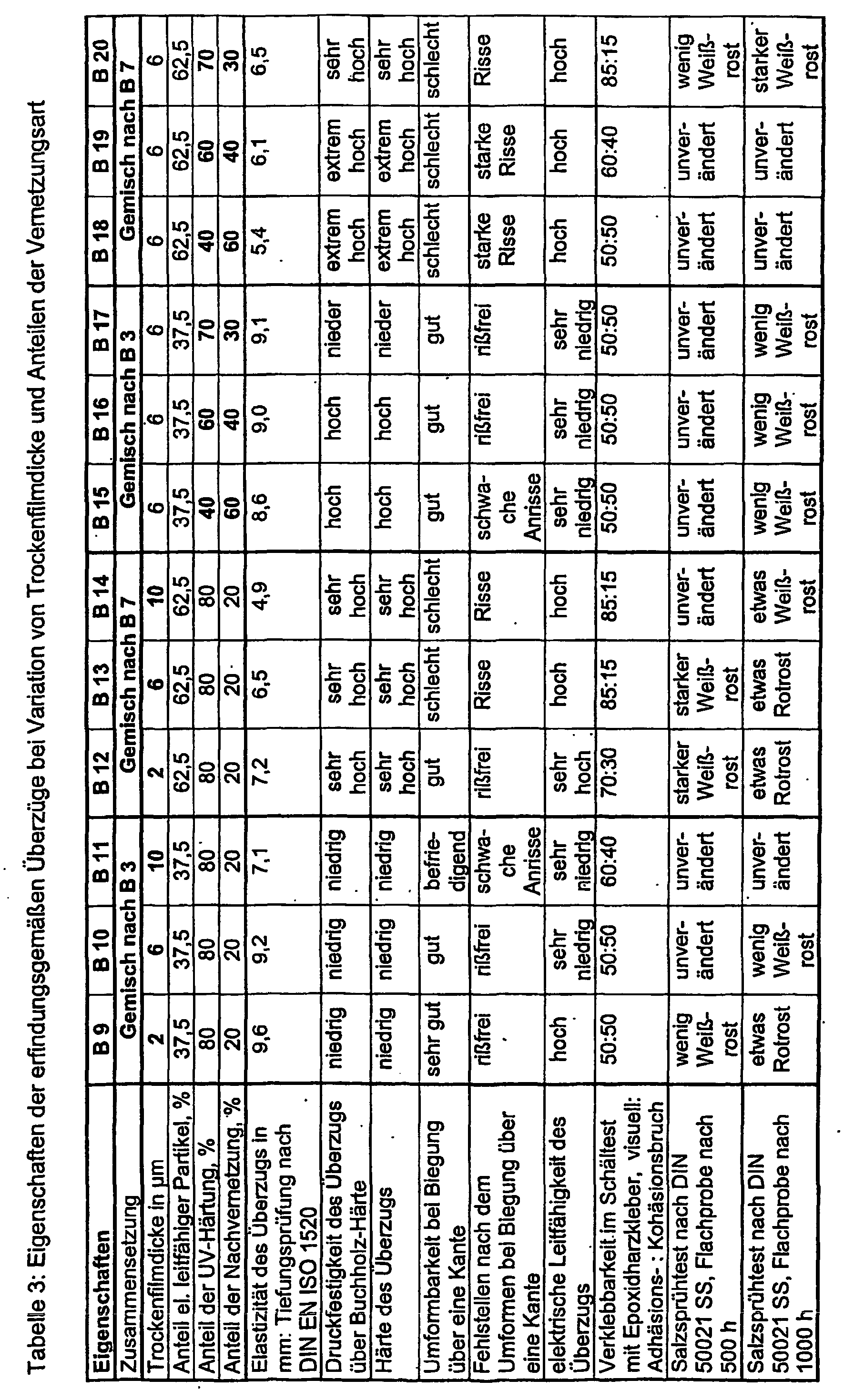

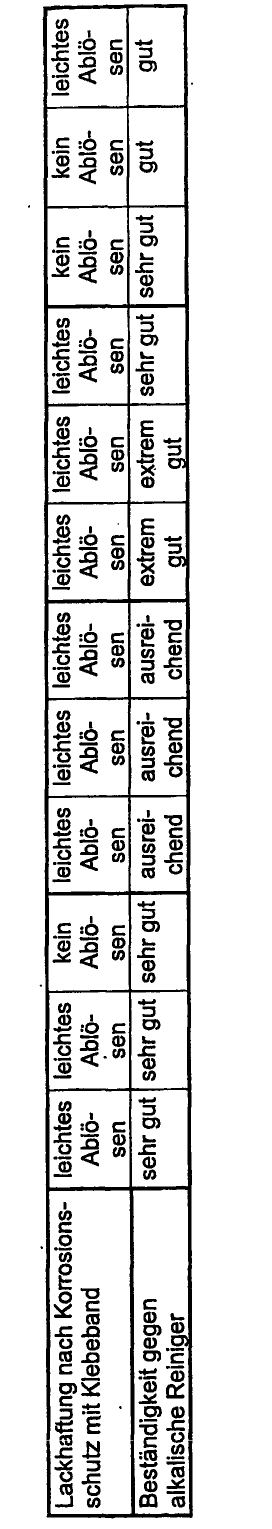

Die Zusammensetzung des Beispiels 3 zeigte proportional zum Gehalt an Polyurethandispersion und aufgrund eines Gehalts an Korrosionsschutzpigment (Silicatpigment) die besten Korrosionsschutzergebnisse. Andererseits ergab sich beim Beispiel 7 aufgrund des höchsten Anteils an elektrisch leitfähigen Pigmenten (Eisenphosphid, magnetisches Eisenoxid bzw. Graphit) die beste elektrische Leitfähigkeit der aufgebrachten Beschichtung und somit auch die beste Schweißeignung. Beim Vergleichsbeispiel 1 wurde keine nachvemetzende Verbindung zugesetzt, so daß die alkalische Beständigkeit m schlechtesten war, weil noch freie OH- und Polyol-Gruppen im aufgetrockneten Film vorhandenen waren. Das Vergleichsbeispiel 2 zeigt zwar die höchste elektrische Leitfähigkeit und somit die beste Eignung zum Schweißen, aber auch die schlechtesten Werte in der chemischen Beständigkeit und in der Verklebbarkeit.

Bei den Beispielen der Tabelle 3 wurde auf der chemischen Zusammensetzung der Beispiele B 3 und B 7 beruhend einerseits die Trockenfilmschichtdicke, andererseits der Anteil der Komponenten, die für die UV-Härtung bzw. alternativ für die Nachvemetzung zuständig sind, variiert. Für die Beispiele B 15 bis B 20, die nur teilweise auf der Zusammensetzung der Beispiele B 3 und B 7 beruhen, wurde der Anteil der Vemetzungsarten dadurch variiert, daß die Anteile an radikalisch polymerisierbare Bindemittel, an nachvemetzender Verbindung und an Photoinitiatoren proportional zu dem Anteil der Vernetzung, an dem sie beteiligt sind, gehalten werden. Mit steigender Trockenfilmdicke wurde die Schweißeignung deutlich herabgesetzt, der Korrosionsschutz aber deutlich verbessert (Tabelle 3). Mit steigendem Anteil an UV-Vemetzung konnte die Druckfestigkeit und Härte des Überzugs verbessert werden, aber der Korrosionsschutz wurde etwas herabgesetzt. Dennoch blieb die Elastizität in den gewünschten Bereichen.

Zusätzlich zu den in den Tabellen 2 und 3 aufgeführten Prüfungen und ihren Ergebnissen wurde ein MEK-Test auf den Vemetzungsgrad nach 2.Tagen nach im wesentlichen vollständiger Aushärtung durchgeführt. Während bei den mit den Gemischen gemäß der Beispiele 1 bis 4 beschichteten 1 Blechen etwa 40 Doppelhübe und bei den Beispielen 5 bis 8 jeweils 25 bis 30 Doppelhübe mit einem mit Methylethylketon getränkten Lappen notwendig waren, um eine Ablösung der Beschichtung zu erreichen, wurde bei der Beschichtung nach den Vergleichsbeispielen 1 und 2 die Ablösung bereits nach 5 bis 10 Doppelhüben beobachtet.

Bei der Salzsprühnebelprüfung nach DIN 50021 über 500 bzw. 1000 h wurde eine sehr gute Korrosionsbeständigkeit bei den mit den erfindungsgemäßen Gemischen beschichteten Blechen beobachtet.

## Patentansprüche

1. Gemisch zum Aufbringen eines polymeren Überzugs auf eine Unterlage, wobei das Gemisch Wasser und ggf. auch organisches Lösemittel enthält sowie mindestens eine wasserdispergierbare radikalisch polymerisierbare Verbindung, mindestens eine wasserdispergierbare polymerisierbare nachvernetzende Verbindung, mindestens eine bei Einwirkung von aktinischer Strahlung freie Radikale bildende wasserdispergierbare Verbindung, mindestens ein Korrosionsschutzpigment sowie mindestens eine Substanz ausgewählt aus elektrisch leitfähigen Substanzen, Wachs und wachsartigen Substanzen, wobei die radikalisch polymerisierbare Verbindung bei der aktinischen Bestrahlung mit den gebildeten freien Radikalen bei Raumtemperatur nicht vollständig aushärten kann, sondem weiterhin reaktive Bindungen aufweist, die im Kontakt mit der nachvemetzenden Verbindung zu einer weitgehenden oder vollständigen Aushärtung führen.

2. Gemisch nach Anspruch 1, **dadurch gekennzeichnet, daß** es Wasser und ggf. auch organisches Lösemittel sowie mindestens ein radikalisch polymerisierbares Bindemittel, mindestens eine bei Einwirkung von aktinischer Strahlung freie Radikale bildende Verbindung, mindestens eine elektrisch leitfähige Substanz wie z.B. ein Pigment und mindestens eine nachvernetzende Verbindung enthält.

3. Gemisch nach Anspruch 1 oder 2, **dadurch gekennzeichnet, daß** das radikalisch polymerisierbare Bindemittel wasserdispergierbar ist und ausgewählt ist aus der Gruppe bestehend aus Acrylaten, Methacrylaten, Epoxyharzen, Polyurethanen und Polyestern, vorzugsweise aus Epoxyacrylaten, Urethanacrylaten und acrythaltigen Polyestern, insbesondere aus Epoxyacrylaten, Urethanacrylaten und acrylhaltigen Polyestern, die freie OH-Gruppen aufweisen.

4. Gemisch nach einem der vorstehenden Ansprüche, **dadurch gekennzeichnet, daß** es mindestens eine radikalisch polymerisierbare Verbindung enthält, die freie OHoder/und Polyal-Gruppen aufweist.

5. Gemisch nach einem der vorstehenden Ansprüche, **dadurch gekennzeichnet, daß** das radikalisch polymerisierbare Bindemittel jeweils mindestens eine ethylenisch, methylenisch oder/und propylenisch ungesättigte Gruppe enthält, die vorzugsweise von α, β-ungesättigten Carbonsäuren abgeleitet ist und insbesondere von Acrylsäure oder/und Methacrylsäure abgeleitet ist.

6. Gemisch nach einem der vorstehenden Ansprüche, **dadurch gekennzeichnet, daß** es mindestens eine wasserdispergierbare polymerisierbare nachvemetzende Verbindung enthält ausgewählt aus der Gruppe von lsocyanat, Isocyanurat, Melaminharz und Verbindungen, die Isocyanat bzw. Isocyanurat erst bei erhöhter Temperatur freisetzen.

7. Gemisch nach einem der vorstehenden Ansprüche, **dadurch gekennzeichnet, daß** die nachvernetzende Verbindung ausgewählt ist aus der Gruppe bestehend aus wassertöslichen, wasserverdünnbaren bzw. wasser-dispergierbaren Isocyanaten und Isocyanuraten, vorzugsweise Isocyanaten oder/und Isocyanuraten auf Basis von TDI, MDI, HDMI oder/und HDI, insbesondere auf Basis von HDI.

8. Gemisch nach einem der vorstehenden Ansprüche, **dadurch gekennzeichnet, daß** die mindestens eine nachvemetzende Verbindung ein Isocyanat oder/und Isocyanurat und das radikalisch polymerisierbare Bindemittel ein hydroxylgruppenhaltiges Urethanacrylat ist.

9. Gemisch nach einem der vorstehenden Ansprüche, **dadurch gekennzeichnet, daß** es mindestens ein elektrisch leitfähiges Pigment enthält ausgewählt aus der Gruppe bestehend aus anorganischen Pigmenten, vorzugsweise aus Oxid(en), Phosphid(en) oder/und Phosphat(en) von Aluminium, Eisen, Kupfer, Mangan, Molybdän oder/und deren Mischung bzw. gemeinsamer Verbindung bzw. Graphit und Graphit-Glimmerpigment(en), insbesondere aus Eisenphosphid oder/und magnetischem Eisenoxid.

10. Gemisch nach einem der vorstehenden Ansprüche, **dadurch gekennzeichnet, daß** die elektrisch leitfähigen Partikel eine mittlere Partikelgröße oder/und eine maximale Partikelgröße, gemessen unter dem Rasterelektronenmikroskop, aufweisen, die größer ist als die durchschnittliche Trockenfilmschichtdicke der hiermit hergestellten und ausgehärteten Schicht.

11. Gemisch nach einem der vorstehenden Ansprüche, **dadurch gekennzeichnet, daß** es 10 bis 50 Gew.% Wasser, 10 bis 30 Gew.% Bindemittel, 30 bis 55 Gew.-% elektrisch leitfähige Substanz(en), 1 bis 20 Gew.-% nachvernetzende Verbindung(en), 1 bis 60 Gew.-% Photoinitiatoren und ggf. Additiv(e) enthält, berechnet als Zusammensetzung des Flüssigkeit enthaltenden Gemisches.

12. Verfahren zum Aufbringen einer gleitfähigen Korrosionsschutzschicht auf eine Unteriage, **dadurch gekennzeichnet, daß** man ein Gemisch nach einem der vorstehenden Ansprüche auf die Oberfläche einer metallischen oder polymeren Unterlage, vorzugsweise auf ein unbeschichtetes oder beschichtetes Stahlband bzw. Stahlblech oder auf ein Kunststoffteil, aufbringt, daß man das Gemisch trocknet und die aufgebrachte Beschichtung solange mit aktinischer Strahlung einer solchen Intensität bestrahlt, daß eine feste, harte, zähelastische Schicht gebildet wird, die eine Schichtdicke im Bereich von 0,5 bis 15 µm aufweist.

13. Verfahren nach Anspruch 12, **dadurch gekennzeichnet, daß** in der aufgebrachten Beschichtung durch Bestrahlung mit aktinischer Strahlung von der hierbei freie Radikale bildenden Verbindung freie Radikale freigesetzt werden, die das radikalisch polymerisierbare Bindemittel nur teilweise aushärten, und daß die Erwärmung der Beschichtung aufgrund der aktinischen Bestrahlung oder/und aufgrund einer anderweitigen Erwärmung die nachvemetzende(n) Verbindung(en) mit dem teilweise ausgehärteten Bindemittel chemisch reagieren lassen, um es weitgehend oder vollständig zu vernetzen.

14. Verfahren nach Anspruch 12 oder 13, **dadurch gekennzeichnet, daß** der Anteil der UV-Härtung an der gesamten Vernetzung im Bereich von 30 bis 90 % liegt.

15. Verfahren nach einem der Ansprüche 12 bis 14, **dadurch gekennzeichnet, daß** die Isocyanat- bzw. Isocyanurat-Gruppe mit den freien Polyol-Gruppen der radikalisch polymerisierbaren Verbindung(en) reagiert.

16. Verfahren nach einem der Ansprüche 12 bis 15, **dadurch gekennzeichnet, daß** das flüssige Beschichtungsgemisch mit einer Dicke im Bereich von 5 bis 25 µm, vorzugsweise im Bereich von 7 bis 20 µm, aufgebracht wird, und die resultierende organische Schicht nach dem Trocknen bzw. Aushärten eine Dicke im Bereich von 0,5 bis 15 µm, vorzugsweise im Bereich von 2 bis 10 µm, aufweist.

17. Verfahren nach einem der Ansprüche 12 bis 16, **dadurch gekennzeichnet, daß** die getrocknete Beschichtung mit einem Anteil im Bereich von 30 bis 90 % durch aktinische Strahlung gehärtet wird und mit einem Anteil im Bereich von 70 bis 10 % chemisch ggf. unter thermischer Einwirkung nachvemetzt wird.

18. Verfahren nach einem der Ansprüche 12 bis 17, **dadurch gekennzeichnet, daß** die zu beschichtende Unterlage ein Band oder Blech ist auf Basis Aluminium, Eisen, Magnesium, Titan, Zink oder/und Zinn, das zuvor mit Aluminium, Zink oder einer metallischen Legierung beschichtet oder/und vorbehandelt wurde, vorzugsweise eines, das nicht chromatiert wurde.

19. Verfahren nach einem der Ansprüche 12 bis 18 **dadurch gekennzeichnet, daß** die zu beschichtende Unterlage vor dem Beschichten mit dem Gemisch nach einem der Ansprüche 1 bis 11 mit einem Vorbehandlungsmittel z.B. auf Basis von Hexafluorid/Tetrafluorid, Chromat, Phosphat, Phosphonat, Seltenerdelementverbindung, Silan/Siloxan oder/und Polymer beschichtet wird.

20. Verfahren nach einem der Ansprüche 12 bis 19, **dadurch gekennzeichnet, daß** zur Aushärtung einer Polymerschicht, die aufgrund des hohen Pigmentgehalts und ihrer Schichtdicke nicht über die ganze Schichtdicke mit aktinischer Strahlung durchstrahlt werden kann und daher nicht allein mit aktinischer Strahlung durchgehärtet werden kann, einer UV-Härtung eine chemische Nachvernetzung folgt, die ggf. durch Erwärmung - insbesondere auf Temperaturen im Bereich von 40 bis 200 °C - beschleunigt bzw. verstärkt werden kann, wobei die Polymerschicht weitgehend oder vollständig durchgehärtet wird.

21. Unterlage mit einer Beschichtung hergestellt nach einem der Ansprüche 12 bis 20.

22. Unterlage nach Anspruch 21, **dadurch gekennzeichnet, daß** die Unterlage ein flexibles Metallblech ist, das elektrolytisch verzinkt oder feuerverzinkt und/oder vorbehandelt ist, vorzugsweise jedoch chromatfrei vorbehandelt ist, und eine darauf aufgebrachte organische Schicht aufweist, die im wesentlichen aus weitgehend oder/und vollständig vernetzten Polymeren sowie Pigmenten besteht und die nach dem Verfahren gemäß einem der Ansprüche 12 bis 20 erhältlich ist.

23. Unterlage nach Anspruch 21 oder 22, insbesondere metallische Unterlage, mit einer Beschichtung auf Basis einer UV-Härtung, die mindestens einen solchen Pigmentgehalt in Gewichtsanteilen in der polymeren Grundmasse enthält wie organisches Bindemittel und nicht mehr aufgrund ihrer Dicke und ihres Pigmentgehalts mit aktinischer Strahlung durchstrahlt werden kann, **dadurch gekennzeichnet, daß** die Beschichtung ohne oder mit thermischer Beeinflussung chemisch nachvemetzt ist.

24. Verwendung einer mit dem Verfahren nach einem der Ansprüche 12 bis 20 beschichteten metallischen Unterlage in der Fahrzeug-, Luft- und Raumfahrtindustrie, im Bauwesen, für Außenverkleidungen, Dachverkleidungen und im Innenausbau, für den Maschinen, und Apparatebau, für Schrankelemente, Regale und Haushaltsgeräte, vorzugsweise als Draht, als Drahtwicklung, als Drahtgeflecht, als Stahlband, als Blech, als Verkleidung, als Abschirmung, als Karosserie oder als Teil einer Karosserie, als Teil eines Fahrzeugs, Anhängers, Wohnmobils oder Flugkörpers, als Abdeckung, als Gehäuse, als Lampe, als Leuchte, als Ampelelement, als Möbelstück oder Möbelelement, als Element eines Haushaltsgeräts, als Gestell, als Profil, als Förmteil komplizierter Geometrie, als Leitplanken-, Heizkörper- oder Zaunelement, als Stoßstange, als Teil aus oder mit mindestens einem Rohr oder/und als Profil, als Fenster-, Tür- oder Fahrradrahmen oder als Kleinteil wie z.B. als Schraube, Mutter, Flansch, Feder oder als Brillengestell.

## Claims

1. Mixture for the application of a polymeric coating to a substrate, wherein the mixture contains water and optionally also organic solvent as well as at least one water-dispersible free-radically polymerisable compound, at least one water-dispersible polymerisable post-crosslinking compound, at least one water-dispersible compound forming free radicals under the action of actinic radiation, at least one anticorrosion pigment as well as at least one substance selected from electrically conducting substances, wax and wax-like substances, wherein the free-radically polymerisable compound cannot completely harden under actinic radiation at room temperature with the free radicals, but furthermore contains reactive bonds that in contact with the post-crosslinking compound lead to a major or complete hardening.

2. Mixture according to claim 1, **characterised in that** it contains water and optionally also organic solvent as well as at least one free-radically polymerisable binder, at least one compound forming free radicals under the action of actinic radiation, at least one electrically conducting substance such as for example a pigment, and at least one post-crosslinking compound.

3. Mixture according to claim 1 or 2, **characterised in that** the free-radically polymerisable binder is water-dispersible and is selected from the group comprising acrylates, methacrylates, epoxy resins, polyurethanes and polyesters, preferably from epoxy acrylates, urethane acrylates and acrylic-containing polyesters, in particular from epoxy acrylates, urethane acrylates and acrylic-containing polyesters that comprise free OH groups.

4. Mixture according to one of the preceding claims, **characterised in that** it contains at least one free-radically polymerisable compound that comprises free OH groups and/or polyol groups.

5. Mixture according to one of the preceding claims, **characterised in that** the free-radically polymerisable binder contains in each case at least one ethylenically, methylenically and/or propylenically unsaturated group that is preferably derived from α-, β-unsaturated carboxylic acids and in particular from acrylic acid and/or methacrylic acid.

6. Mixture according to one of the preceding claims, **characterised in that** it contains at least one water-dispersible polymerisable post-crosslinking compound selected from the group comprising isocyanate, isocyanurate, melamine resin and compounds that release isocyanate or isocyanurate only at elevated temperature.

7. Mixture according to one of the preceding claims, **characterised in that** the post-crosslinking compound is selected from the group comprising water-soluble, water-thinnable or water-dispersible isocyanates and isocyanurates, preferably isocyanates and/or isocyanurates based on TDI, MDI, HDMI and/or HDI, in particular based on HDI.

8. Mixture according to one of the preceding claims, **characterised in that** the at least one post-crosslinking compound is an isocyanate and/or an isocyanurate and the free-radically polymerisable binder is a urethane acrylate containing hydroxyl groups.

9. Mixture according to one of the preceding claims, **characterised in that** it contains at least one electrically conducting pigment selected from the group comprising inorganic pigments, preferably oxide(s), phosphide(s) and/or phosphate(s) of aluminium, iron, copper, manganese, molybdenum and/or their mixture or joint compound or graphite and graphite-mica pigment(s), in particular iron phosphide and/or magnetic iron oxide.

10. Mixture according to one of the preceding claims, **characterised in that** the electrically conducting particles have a mean particle size and/or a maximum particle size, measured under a scanning electron microscope, that is greater than the average dry film layer thickness of the layer produced therewith and subsequently hardened.

11. Mixture according to one of the preceding claims, **characterised in that** it contains 10 to 50 wt.% of water, 10 to 30 wt.% of binder, 30 to 55 wt.% of electrically conducting substance(s), 1 to 20 wt.% of post-crosslinking compound(s), 1 to 60 wt.% of photoinitiators and optionally additive(s), calculated as composition of the liquid-containing mixture.

12. Process for the application of a slideable anticorrosion layer to a substrate, **characterised in that** a mixture according to one of the preceding claims is applied to the surface of a metallic or polymeric substrate, preferably to an uncoated or coated steel strip or steel sheet or to a plastics part, and that the mixture is dried and the applied coating is irradiated for a sufficient time with actinic radiation of such an intensity that a solid, hard, viscoplastic layer is formed that has a layer thickness in the range from 0.5 to 15 µm.

13. Process according to claim 12, **characterised in that** free radicals are released in the applied coating by irradiation with actinic radiation of the compound forming free radicals under the action of the latter, which only partially harden the free-radically polymerisable binder, and that the heating of the coating under the action of the actinic radiation and/or under the action of another form of heating causes the post-crosslinking compound(s) to react chemically with the partially hardened binder, in order largely or wholly to crosslink the latter.

14. Process according to claim 12 or 13, **characterised in that** the proportion of the UV hardening accounting for the total crosslinking is in the range from 30 to 90%.

15. Process according to one of claims 12 to 14, **characterised in that** the isocyanate group or isocyanurate group reacts with the free polyol groups of the free-radically polymerisable compound(s).

16. Process according to one of claims 12 to 15, **characterised in that** the liquid coating mixture is applied in a thickness in the range from 5 to 25 µm, preferably in the range from 7 to 20 µm, and the resulting organic layer after drying and hardening has a thickness in the range from 0.5 to 15 µm, preferably in the range from 2 to 10 µm.

17. Process according to one of claims 12 to 16, **characterised in that** the dried coating is hardened in a proportion in the range from 30 to 90% by actinic radiation and is chemically post-crosslinked, optionally under the action of heat, in a proportion in the range from 70 to 10%.

18. Process according to one of claims 12 to 17, **characterised in that** the substrate to be coated is a strip or sheet based on aluminium, iron, magnesium, titanium, zinc and/or tin, which has previously been coated and/or pretreated with aluminium, zinc or a metal alloy, preferably one that has not been chromated.

19. Process according to one of claims 12 to 18, **characterised in that** the substrate to be coated is treated, before the coating with the mixture according to one of claims 1 to 11, with a pretreatment agent, for example based on hexafluoride/tetrafluoride, chromate, phosphate, phosphonate, a rare earth element compound, silane/siloxane and/or polymer.

20. Process according to one of claims 12 to 19, **characterised in that** for the hardening of a polymer layer which on account of the high pigment content and its layer thickness cannot be irradiated with actinic radiation through the whole layer thickness and therefore cannot be hardened by actinic radiation alone, a UV hardening is followed by a chemical post-crosslinking, which may optionally be accelerated or intensified by heating, in particular at temperatures in the range from 40° to 200°C, whereby the polymer layer is largely or wholly through-hardened.

21. Substrate with a coating produced according to one of claims 12 to 20.

22. Substrate according to claim 21, **characterised in that** the substrate is a flexible metal sheet that has been electrolytically galvanised or hot-dip galvanised and/or pretreated, preferably however pretreated in a chromate-free manner, and which comprises an organic layer applied thereto that consists substantially of largely and/or completely crosslinked polymers as well as pigments and which is obtainable by the process according to one of claims 12 to 20.

23. Substrate according to claim 21 or 22, in particular metallic substrate, with a coating based on a UV hardening that contains at least such a pigment content in proportion by weight in the polymeric base composition as organic binder and that on account of its thickness and its pigment content can no longer be through-radiated with actinic radiation, **characterised in that** the coating is chemically post-crosslinked without or under the action of heat.

24. Use of a metallic substrate coated by the process according to one of claims 12 to 20 in the automobile, aircraft and aerospace industries, in building and construction, for external linings, roof linings and in internal construction, in mechanical engineering and apparatus construction, for cabinet elements, shelving and domestic appliances, preferably as wire, as wire coil, as wire mesh, as steel strip, as metal sheet, as cladding/lining, as screening, as car body or as a part of a car body, as part of a vehicle, trailer, mobile home or missile, as covering, as housing, as a lamp, as a light, as a hanging light unit, as an item of furniture or furniture part, as a component of a domestic appliance, as a frame, as profiled section, as moulded part of complicated geometry, as beam barrier, radiator or fence part, as automobile bumper, as part of or with at least one pipe and/or profiled section, as a window frame, door frame or bicycle frame, or a small part such as for example a screw, nut, flange, spring or a spectacle frame.

## Revendications

1. Mélange pour appliquer un revêtement de polymère sur un support, qui contient de l'eau et éventuellement également un solvant organique, ainsi que au moins un composé polymérisable par voie radicalaire, dispersable dans l'eau, au moins un composé polymérisable, dispersable dans l'eau, provoquant une réticulation ultérieure, au moins un composé dispersable dans l'eau, formant des radicaux libres sous l'action de rayons actiniques, au moins un pigment protégeant contre la corrosion et au moins une substance choisie parmi des substances conductrices de l'électricité, la cire et des substances cireuses, le composé polymérisable par voie radicalaire ne pouvant pas complètement durcir à la température de la salle sous l'effet des radicaux libres formés lors de l'exposition à des rayons actiniques, mais présentant des liaisons aptes à réagir en outre, qui, en contact avec le composé provoquant une réticulation ultérieure, conduisent à un durcissement poussé ou complet.

2. Mélange selon la revendication 1, **caractérisé en ce qu'**il contient de l'eau et éventuellement également un solvant organique, ainsi qu'au moins un liant polymérisable par voie radicalaire, au moins un composé formant des radicaux libres sous l'action de rayons actiniques, au moins une substance conductrice de l'électricité, comme par exemple un pigment, et au moins un composé provoquant une réticulation ultérieure.

3. Mélange selon la revendication 1 ou 2, **caractérisé en ce que** le liant polymérisable par voie radicalaire est dispersable dans l'eau et est choisi parmi les acrylates, les méthacrylates, les résines époxy, les polyuréthanes et les polyesters, de préférence parmi les époxyacrylates, les uréthanacrylates, et les polyesters contenant des groupes acryliques, en particulier parmi les époxyacrylates, les uréthanacrylates et les polyesters contenant des groupes acryliques, qui présentent des groupes OH libres.

4. Mélange selon l'une quelconque des revendications précédentes, **caractérisé en ce qu'**il contient au moins un composé polymérisable par voie radicalaire, qui présente des groupes OH ou/et des groupes polyol libres.

5. Mélange selon l'une quelconque des revendications précédentes, **caractérisé en ce que** le liant polymérisable par voie radicalaire contient à chaque fois au moins un groupe insaturé, éthylénique, méthylénique ou/et propylénique, qui est issu de préférence d'acides carboxyliques a, β-insaturés, et en particulier de l'acide acrylique ou/et de l'acide méthacrylique.

6. Mélange selon l'une quelconque des revendications précédentes, **caractérisé en ce qu'**il contient au moins un composé polymérisable, dispersable dans l'eau, provoquant une réticulation ultérieure, choisi parmi les isocyanates, les isocyanurates, les résines de mélamine et les composés qui libèrent de l'isocyanate ou de l'isocyanurate seulement à température élevée.

7. Mélange selon l'une quelconque des revendications précédentes, **caractérisé en ce que** le composé provoquant une réticulation ultérieure est choisi parmi les isocyanates et les isocyanurates, solubles dans l'eau, diluables dans l'eau ou dispersables dans l'eau, de préférence les isocyanates et/ou les isocyanurates à base de TDI, MDI, HDMI ou/et HDI, en particulier à base de HDI.

8. Mélange selon l'une quelconque des revendications précédentes, **caractérisé en ce que** le au moins un composé provoquant une réticulation ultérieure est un isocyanate ou/et un isocyanurate et le liant polymérisable par voie radicalaire est un uréthanacrylate portant des groupes hydroxyle.

9. Mélange selon l'une quelconque des revendications précédentes, **caractérisé en ce qu'**il contient au moins un pigment conducteur de l'électricité, choisi parmi des pigments minéraux, de préférence parmi les oxydes, les phosphures ou/et les phosphates d'aluminium, de fer, de cuivre, de manganèse et de molybdène ou/et leurs mélanges ou leurs combinaisons, ou parmi le graphite et les pigments micacés de graphite, en particulier parmi le phosphure de fer ou/et l'oxyde de fer magnétique.

10. Mélange selon l'une quelconque des revendications précédentes, **caractérisé en ce que** les particules conductrices de l'électricité ont une taille moyenne de particule ou/et une taille maximale de particule, mesurée au microscope électronique à balayage, qui est supérieure à l'épaisseur moyenne de couche de film sec de la couche ainsi préparée et durcie.

11. Mélange selon l'une quelconque des revendications précédentes, **caractérisé en ce qu'**il contient 10 à 50 % en poids d'eau, 10 à 30 % en poids de liant, 30 à 55 % en poids d'une ou plusieurs substances conductrices de l'électricité, 1 à 20 % en poids d'un ou plusieurs composés provoquant une réticulation ultérieure, 1 à 60 % en poids de photoamorceur et éventuellement un ou plusieurs additifs, ces pourcentages étant calculés pour la composition du mélange contenant le liquide.

12. Procédé pour appliquer une couche de protection contre la corrosion, glissante, sur un support, **caractérisé en ce que** l'on applique un mélange selon l'une quelconque des revendications précédentes, sur la surface d'un support métallique ou d'un support en polymère, de préférence sur une bande d'acier ou une tôle d'acier revêtue ou non revêtue, ou sur une pièce en matière plastique, **en ce que** l'on sèche le mélange et expose le revêtement appliqué à des rayons actiniques d'intensité appropriée, suffisamment longtemps pour former une couche solide, dure, élastique et tenace, qui présente une épaisseur de 0,5 à 15 µm.

13. Procédé selon la revendication 12, **caractérisé en ce que** des radicaux libres sont libérés dans le revêtement appliqué par irradiation avec des rayons actiniques du composé formant des radicaux libres, radicaux qui ne font durcir que partiellement le liant polymérisable par voie radicalaire, et **en ce que** le chauffage du revêtement par les rayons actiniques ou/et d'une autre manière fait réagir chimiquement le ou les composés provoquant une réticulation ultérieure avec le liant partiellement durci, pour réticuler ce dernier de manière poussée ou complètement.

14. Procédé selon la revendication 12 ou 13, **caractérisé en ce que** la part de durcissement par les UV représente 30 à 90 % de la réticulation totale.

15. Procédé selon l'une quelconque des revendications 12 à 14, **caractérisé en ce que** le groupe isocyanate ou isocyanurate réagit avec les groupes polyol libres du ou des composés polymérisables par voie radicalaire.

16. Procédé selon l'une quelconque des revendications 12 à 15, **caractérisé en ce que** l'on applique le mélange de revêtement liquide en une couche d'une épaisseur de 5 à 25 µm, de préférence de 7 à 20 µm, et la couche organique résultante présente après séchage et durcissement une épaisseur de 0,5 à 15 µm, de préférence de 2 à 10 µm.

17. Procédé selon l'une quelconque des revendications 12 à 16, **caractérisé en ce que** le revêtement séché est durci par les rayons actiniques pour une part correspondant à 30 à 90 %, et est réticulé ultérieurement chimiquement, éventuellement sous l'action de la chaleur, pour une part correspondant à 70 à 10 %.

18. Procédé selon l'une quelconque des revendications 12 à 17, **caractérisé en ce que** le support à revêtir est une bande ou une tôle à base d'aluminium, de fer, de magnésium, de titane, de zinc ou/et d'étain, qui a été préalablement revêtue d'aluminium, de zinc ou d'un alliage métallique, ou/et prétraitée, de préférence une bande ou une tôle qui n'a pas été chromatée.

19. Procédé selon l'une quelconque des revendications 12 à 18, **caractérisé en ce que** le support à revêtir est revêtu, avant le revêtement par le mélange selon l'une quelconque des revendications 1 à 11, avec un agent de prétraitement, par exemple à base de hexafluorure/tétrafluorure, chromate, phosphate, phosphonate, dérivé des éléments des terres rares, silane/siloxane ou/et polymère.

20. Procédé selon l'une quelconque des revendications 12 à 19, **caractérisé en ce que**, pour le durcissement d'une couche de polymère qui, par suite de sa teneur élevée en pigment et son épaisseur, ne peut pas être irradiée dans toute l'épaisseur par des rayons actiniques et ne peut donc pas être durcie en profondeur seulement par des rayons actiniques, un durcissement par des UV est suivi d'une réticulation chimique ultérieure qui peut éventuellement être accélérée ou renforcée par chauffage, en particulier à des températures situées dans l'intervalle allant de 40 à 200 °C, grâce à quoi la couche de polymère est durcie de manière poussée ou complètement.

21. Support portant un revêtement, préparé par le procédé selon l'une quelconque des revendications 12 à 20.

22. Support selon la revendication 21, **caractérisé en ce qu'**il est une tôle métallique souple, qui est zinguée électrolytiquement ou au feu et/ou prétraitée, le prétraitement s'effectuant toutefois de préférence sans chromate, et qui porte, appliquée sur elle, une couche organique qui est constituée essentiellement de polymères réticulés de manière poussée ou totalement, et de pigments, et que l'on peut obtenir par le procédé selon l'une quelconque des revendications 12 à 20.

23. Support selon la revendication 21 ou 22, en particulier support métallique, portant un revêtement à base de durcissement par les UV, qui contient une proportion de pigment, en proportion en poids dans la matière polymère de base, au moins pareille à celle du liant organique et qui, du fait de son épaisseur et de sa teneur en pigment; ne peut plus être irradié en profondeur par des rayons actiniques, **caractérisé en ce que** le revêtement est réticulé chimiquement ultérieurement, sous l'action de la chaleur ou sans action de la chaleur.

24. Utilisation d'un support métallique revêtu par le procédé selon l'une quelconque des revendications 12 à 20, dans l'industrie de l'automobile, en aéronautique et en astronautique, dans le bâtiment, pour des revêtements extérieurs, des revêtements de toiture et dans des intérieurs, pour la construction de machines et d'appareils, pour des éléments d'armoire, des étagères, et des appareils électroménagers, de préférence comme fil, comme enroulement de fil, comme treillis de fil, comme bande d'acier, comme tôle, comme revêtement, comme écran, comme carrosserie ou comme partie d'une carrosserie, comme partie d'une automobile, d'une remorque, d'une caravane ou d'un engin volant, comme couverture, comme boîtier, comme lampe, comme luminaire, comme élément de feu de signalisation, comme pièce ou élément de meuble, comme élément d'un appareil électroménager, comme bâti, comme profilé, comme pièce moulée de géométrie compliquée, comme élément de garde-fou, comme élément de radiateur ou comme élément de clôture, comme pare-chocs, comme pièce tubulaire ou comportant au moins un tube ou/et comme profilé, comme cadre de fenêtre, de porte ou de vélo, ou comme petite pièce comme par exemple une vis, un écrou, une bride, un ressort, ou comme monture de lunettes.
